# EUROPEAN PATENT APPLICATION

(11) **EP 4 686 262 A1**
(43) Date of publication of application: **28.01.2026**
(21) Application number: 24784083.8
(22) Date of filing: 22.03.2024
(51) Int. Cl.: H04W 40/02

(54) **COMMUNICATION METHOD AND COMMUNICATION APPARATUS**

(30) Priority: 07.04.2023 CN 202310394661
(71) Applicant: Huawei Technologies Co., Ltd., Shenzhen, Guangdong 518129 (CN)
(72) Inventor: LEI, Zhongding, Shenzhen, Guangdong 518129 (CN)
(74) Representative: Goddar, Heinz J.
(86) International application number: PCT/CN2024/083289
(87) International publication number: WO 2024/207998

(57) **Abstract**

Embodiments of this application provide a communication method and a communication apparatus. The method includes: When the communication apparatus detects an application, the communication apparatus determines, based on a second application identifier and a second application distinguishing parameter that are associated with the application, that the application matches a route selection policy rule, and associates the application with a session according to the route selection policy rule. The route selection policy rule includes a first application identifier and a first application distinguishing parameter. According to the method disclosed in this application, the addition of both the first application distinguishing parameter and the second application distinguishing parameter allows the communication apparatus to effectively identify the application.

## Description

This application claims priority to Chinese Patent Application No. 202310394661.6, filed with the China National Intellectual Property Administration on April 7, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a communication system, a communication apparatus or user equipment (user equipment, UE) may determine, according to a route selection policy (UE route selection policy, URSP), a path for sending data traffic of the communication apparatus or the user equipment. For example, the UE may select, according to the URSP rule, an existing session connected to a data network (data network, DN) to send the data traffic of the UE; or the UE sends the data traffic of the UE by setting up a new session in a specific network slice.

Currently, how to reduce or avoid potential security risks that terminal devices may encounter in a route selection process is an issue needs to be considered.

### SUMMARY

This application provides a communication method and a communication apparatus, to reduce or avoid potential security risks terminal devices may encounter in a route selection process.

According to a first aspect, a communication method is provided. The method may be performed by a communication apparatus. Optionally, the communication apparatus may be a terminal device, for example, a mobile phone, a vehicle, an uncrewed aerial vehicle, or a wearable device, or may be a chip or a circuit in the terminal device. In addition, the terminal device may also be referred to as user equipment. Therefore, the communication apparatus may alternatively be user equipment or a chip in the user equipment. This is not specifically limited in this application.

The method includes: When the communication apparatus detects an application, the communication apparatus determines, based on a second application identifier and a second application distinguishing parameter of the application, that the application matches a route selection policy rule. The route selection policy rule includes a first application identifier and a first application distinguishing parameter. The communication apparatus associates the application with a session, for example, a protocol data unit (protocol data unit, PDU) session, according to the route selection policy rule.

For example, the application may also be referred to as application traffic. That the communication apparatus determines that the application matches the route selection policy rule may be evaluating whether the "application" matches a traffic descriptor in the route selection policy rule, or may be understood as evaluating whether the "application traffic (traffic) "matches a traffic descriptor in the route selection policy rule. This is not distinguished in this application, and related parts are not described again in the following.

Based on the solution provided in this application, the first application distinguishing parameter and the second application distinguishing parameter are further verified, so that the terminal device can effectively identify the detected application, and further determine whether the application matches the route selection policy rule. This prevents a network resource of the application in the route selection policy rule from being infringed, and reduces a risk that a network node is attacked by malicious traffic.

With reference to the first aspect, in some implementations of the first aspect, before the communication apparatus determines, based on the second application identifier and the second application distinguishing parameter of the application, that the application matches the route selection policy rule, the method further includes: The communication apparatus receives the route selection policy rule from a network device.

With reference to the first aspect, in some implementations of the first aspect, the second application distinguishing parameter includes one or more of the following: an identifier of a binding platform of the application, an identifier of an application program source of the application, a name of an installation package of the application, a user identifier of the application, an identifier of a developer of the application, an identifier of a public land mobile network associated with the application, or an identifier of an application function used to generate the route selection policy rule.

With reference to the first aspect, in some implementations of the first aspect, the communication apparatus performs integrity or authenticity verification on the second application identifier and the second application distinguishing parameter. That the communication apparatus determines, based on the second application identifier and the second application distinguishing parameter of the application, that the application matches the route selection policy rule includes: When the integrity or authenticity verification succeeds, the communication apparatus determines, based on the second application identifier and the second application distinguishing parameter, that the application matches the route selection policy rule.

Based on the foregoing solution, integrity or authenticity verification is performed on the second application identifier and the second application distinguishing parameter, to ensure that the second application identifier and the second application distinguishing parameter are not tampered with. This can further reduce or avoid a potential security risk that may be encountered by the terminal device in a route selection process.

With reference to the first aspect, in some implementations of the first aspect, that the communication apparatus determines, based on the second application identifier and the second application distinguishing parameter of the application, that the application matches the route selection policy rule includes: The communication apparatus determines that the first application identifier is the same as the second application identifier and that the first application distinguishing parameter is the same as the second application distinguishing parameter.

Based on the foregoing solution, when determining that the first application identifier is the same as the second application identifier and that the first application distinguishing parameter is the same as the second application distinguishing parameter, the communication apparatus determines that the application matches the route selection policy rule. This can further reduce or avoid a potential security risk that may be encountered by the terminal device in the route selection process.

With reference to the first aspect, in some implementations of the first aspect, the communication apparatus includes an operating system and a modem, and the method further includes: The operating system receives a first parameter from the application. The first parameter includes one or more of the following: a temporary identifier, a temporary key, or an access token. The operating system determines the second application identifier and the second application distinguishing parameter based on the first parameter, and sends the second application identifier and the second application distinguishing parameter to the modem. That the communication apparatus determines, based on the second application identifier and the second application distinguishing parameter of the application, that the application matches the route selection policy rule includes: The modem determines that the second application identifier is the same as the first application identifier and that the second application distinguishing parameter is the same as the first application distinguishing parameter.

Based on the foregoing solution, the operating system verifies the second application identifier and the second application distinguishing parameter of the application, to determine authenticity or integrity of the application. In addition, when the first application identifier is the same as the second application identifier, and the second application distinguishing parameter is the same as the first application distinguishing parameter, the modem determines that the application matches the route selection policy rule. This can reduce or avoid a potential security risk that may be encountered by the terminal device in the route selection process.

With reference to the first aspect, in some implementations of the first aspect, that the operating system determines the second application identifier and the second application distinguishing parameter based on the first parameter includes: The operating system determines the second application identifier and the second application distinguishing parameter based on the temporary identifier and a mapping relationship, where the mapping relationship indicates an association relationship among the second application identifier, the second application distinguishing parameter, and the temporary identifier; or the operating system determines, based on the temporary key or the access token, the second application identifier and the second application distinguishing parameter that are associated with the application.

Based on the foregoing solution, the operating system determines the second application identifier and the second application distinguishing parameter of the application based on the temporary identifier, the temporary key, or the access token. In consideration of uncertainty of generation of the temporary identifier, the temporary key, or the access token, the solution can be more secure, and a potential security risk that may be encountered by the terminal device in the route selection process is reduced or avoided.

With reference to the first aspect, in some implementations of the first aspect, that the operating system receives the first parameter from the application includes: When the application is activated or used, the operating system receives the first parameter from the application.

With reference to the first aspect, in some implementations of the first aspect, before the operating system receives the first parameter from the application, the method further includes: The operating system generates the first parameter, and sends the first parameter to the application. When the first parameter is the temporary identifier, the operating system stores the mapping relationship.

Based on the foregoing solution, in consideration of uncertainty of generation of the temporary identifier, the temporary key, or the access token, the operating system determines, based on the temporary identifier, the temporary key, or the access token, the second application identifier associated with the application, so that the solution can be more secure, and a potential security risk that may be encountered by the terminal device in the route selection process is reduced or avoided.

With reference to the first aspect, in some implementations of the first aspect, the communication apparatus sends an authentication request message to a user. The authentication request message includes the second application identifier and the second application distinguishing parameter, and the authentication request message is used to request the user to verify the second application identifier and the second application distinguishing parameter. The communication apparatus receives an authentication response message from the user. The authentication response message includes a verification result of the second application identifier and the second application distinguishing parameter. That the communication apparatus determines, based on the second application identifier and the second application distinguishing parameter of the application, that the application matches the route selection policy rule includes: The communication apparatus determines, based on the authentication response message, that the application matches the route selection policy rule.

Based on the foregoing solution, the authentication request message is sent to the user, to request the user to verify the second application identifier and the second application distinguishing parameter, and it is determined based on identification and verification results obtained by the user that the application matches the route selection policy rule. This reduces or avoids a potential security risk that may be encountered by the terminal device in the route selection process.

With reference to the first aspect, in some implementations of the first aspect, the communication apparatus sends the authentication request message to the user. The authentication request message includes the second application identifier and the second application distinguishing parameter, and the authentication request message is used to request the user to determine whether the second application identifier matches the first application identifier and whether the second application distinguishing parameter matches the first application distinguishing parameter. The communication apparatus receives the authentication response message from the user. The authentication response message includes a first matching result of the second application identifier and the first application identifier and a second matching result of the second application distinguishing parameter and the first application distinguishing parameter. That the communication apparatus determines, based on the second application identifier and the second application distinguishing parameter of the application, that the application matches the route selection policy rule includes: The communication apparatus determines, based on the authentication response message, that the application matches the route selection policy rule.

Based on the foregoing solution, the authentication request message is sent to the user, to request the user to determine whether the second application identifier matches the first application identifier and whether the second application distinguishing parameter matches the first application distinguishing parameter, and it is determined based on identification and verification results obtained by the user that the application matches the route selection policy rule. This reduces or avoids a potential security risk that may be encountered by the terminal device in the route selection process.

With reference to the first aspect, in some implementations of the first aspect, that the communication apparatus determines, based on the authentication response message, that the application matches the route selection policy rule includes: When the verification result indicates that the verification performed by the user on the second application identifier and the second application distinguishing parameter succeeds, the communication apparatus determines that the application matches the route selection policy rule; or when the first matching result indicates that the second application identifier is the same as the first application identifier, and the second matching result indicates that the second application distinguishing parameter is the same as the first application distinguishing parameter, the communication apparatus determines that the application matches the route selection policy rule.

Based on the foregoing solution, the communication apparatus determines, based on the verification result or the matching results of the user, that the application matches the route selection policy rule. This can improve security, and reduce or avoid a potential security risk that may be encountered by the terminal device in the route selection process.

With reference to the first aspect, in some implementations of the first aspect, the communication apparatus determines, based on a result of verifying the second application distinguishing parameter associated with the application by the user, the second application distinguishing parameter associated with the application; or when the matching result indicates that the second application distinguishing parameter associated with the application is the same as the first application distinguishing parameter, the communication apparatus determines that the application matches the route selection policy rule.

According to a second aspect, a communication method is provided. The method may be performed by a network device, or may be performed by a chip or a circuit used for the network device. This is not limited in this application. For ease of description, an example in which the method is performed by the network device is used below for description.

The method includes: The network device obtains a route selection policy rule, where the route selection policy rule includes a first application identifier and a first application distinguishing parameter; and sends the route selection policy rule to a communication apparatus.

Based on the solution provided in this application, the first application distinguishing parameter is introduced, so that the terminal device can effectively identify the detected application, and further verify whether the application matches the route selection policy rule. This prevents a network resource of the application associated with the route selection policy rule from being infringed, and reduces a risk that a network node is attacked by malicious traffic.

For some other specific implementations on the network device side and beneficial effect of some implementations, refer to related descriptions in the first aspect. Details are not described herein again.

According to a third aspect, a communication method is provided. The method may be performed by a communication apparatus, or may be performed by a chip or a circuit used in the communication apparatus. This is not limited in this application. For ease of description, an example in which the method is performed by the communication apparatus is used below for description.

The method includes: When the communication apparatus detects an application, the communication apparatus determines that the application matches a route selection policy rule; sends a request message to a network device, where the request message includes an application identifier of the application, and the request message is used to request to verify whether the application matches the route selection policy rule; and receives a response message from the network device.

Based on the solution provided in this application, on the basis that the communication apparatus determines that the detected application matches the route selection policy rule, the additional step of requesting the network device to verify whether the application matches the route selection policy rule ensures authenticity of the application detected by the communication apparatus, prevents a network resource of the application associated with the route selection policy rule from being infringed, and reduces risks that network nodes are attacked by malicious traffic.

With reference to the third aspect, in some implementations of the third aspect, the application identifier of the application is security protected.

Based on the foregoing solution, the application identifier of the application is security protected. This can improve network communication security, prevent the application identifier of the application from being maliciously tampered with in a transmission process, and reduce risks that the network resource of the application in the route selection policy rule is infringed and the network node is attacked by malicious traffic.

With reference to the third aspect, in some implementations of the third aspect, the security protected application identifier of the application includes one or more of the following: a digitally signed application identifier of the application, an application identifier of the application that has been encrypted with a key, or an application identifier of the application that has been hash processed.

With reference to the third aspect, in some implementations of the third aspect, the request message further includes authentication information, the authentication information includes the application identifier of the application and a digital signature used to verify the application identifier of the application, the authentication information is used to verify authenticity or integrity of the application, and the authentication information is any one of the following: the digital signature, a hash value, or a message authentication code.

Based on the foregoing solution, the authentication information is carried, so that the network device verifies authenticity or integrity of the application newly detected by the communication apparatus. This improves security of verifying the application identifier of the application by the network device, improves network communication security, and reduces risks that the network resource of the application in the route selection policy rule is infringed and the network node is attacked by malicious traffic.

Optionally, the communication apparatus sends an identifier of the route selection policy rule to the network device.

With reference to the third aspect, in some implementations of the third aspect, before the communication apparatus sends the request message to the network device, the method further includes: The communication apparatus determines, based on first configuration information, to send the application identifier of the application to the network device, where the first configuration information indicates to send the application identifier of the application to the network device, and the first configuration information is pre-configured in the communication apparatus; or determines, based on first indication information from the network device, to send the application identifier of the application to the network device, where the first indication information indicates to send the application identifier of the application to the network device.

Based on the foregoing solution, the communication apparatus may determine, based on the first configuration information or the first indication information, to send the request message including the application identifier of the application to the network device. An additional procedure in which the network device verifies whether the application matches the route selection policy rule prevents the communication apparatus from forging the application. This can improve network communication security, and reduce risks that the network resource of the application in the route selection policy rule is infringed and the network node is attacked by malicious traffic.

With reference to the third aspect, in some implementations of the third aspect, the request message is a session setup request message or a session modification request message.

Based on the foregoing solution, the application identifier of the application is carried in the session setup request message or the session modification request message, to reduce an unnecessary interaction procedure, and reduce signaling overheads.

With reference to the third aspect, in some implementations of the third aspect, the request message further includes second indication information, and the second indication information indicates that the request message carries the application identifier of the application, or the second indication information indicates the network device to verify whether the application matches the route selection policy rule.

Based on the foregoing solution, the second indication information may indicate the network device to verify the application identifier of the application. More verification or the additional verification process helps improve network communication security, and reduce risks that the network resource of the application in the route selection policy rule is infringed and the network node is attacked by malicious traffic.

With reference to the third aspect, in some implementations of the third aspect, the request message further includes an application distinguishing parameter of the application. The application distinguishing parameter of the application is further verified, to more effectively identify authenticity of the application detected by the communication apparatus, and further determine that the application matches the route selection policy rule. This prevents the network resource of the application in the route selection policy rule from being infringed, and reduces risks that network nodes are attacked by malicious traffic.

With reference to the third aspect, in some implementations of the third aspect, the application distinguishing parameter of the application is security protected. Security protection is performed on the application distinguishing parameter of the application, to effectively improve network communication security, prevent the application distinguishing parameter of the application from being maliciously tampered with in a transmission process, and reduce risks that the network resource of the application in the route selection policy rule is infringed and the network node is attacked by malicious traffic.

With reference to the third aspect, in some implementations of the third aspect, the security protected application distinguishing parameter of the application includes one or more of the following: a digitally signed application distinguishing parameter of the application, an application distinguishing parameter of the application that is encrypted with a key, or an application distinguishing parameter of the application that is hash processed.

With reference to the third aspect, in some implementations of the third aspect, before the communication apparatus sends the request message to the network device, the method further includes: The communication apparatus determines, based on second configuration information, to send the application identifier of the application and the application distinguishing parameter of the application to the network device, where the second configuration information indicates to send the application identifier of the application and the application distinguishing parameter of the application to the network device, and the second configuration information is pre-configured in the communication apparatus; or the communication apparatus determines, based on third indication information from the network device, to send the application identifier of the application and the application distinguishing parameter of the application to the network device, where the third indication information indicates to send the application identifier of the application and the application distinguishing parameter of the application to the network device.

Based on the foregoing solution, the communication apparatus may determine, based on the second configuration information or the third indication information, to send the request message including the application identifier of the application and the application distinguishing parameter of the application to the network device. The additional procedure in which the network device verifies whether the application matches the route selection policy rule helps improve network communication security, and reduces risks that the network resource of the application in the route selection policy rule is infringed and the network node is attacked by malicious traffic.

With reference to the third aspect, in some implementations of the third aspect, the request message further includes fourth indication information, and the fourth indication information indicates that the request message carries the application identifier of the application and the application distinguishing parameter of the application, or the fourth indication information indicates the network device to verify whether the application matches the route selection policy rule.

Based on the foregoing solution, the fourth indication information may indicate the network device to verify the application identifier of the application and the application distinguishing parameter of the application. More verification or the additional verification process helps improve network communication security, and reduce risks that the network resource of the application in the route selection policy rule is infringed and the network node is attacked by malicious traffic.

With reference to the third aspect, in some implementations of the third aspect, when the application matches the route selection policy rule, the response message indicates that the network device accepts a request of the communication apparatus.

With reference to the third aspect, in some implementations of the third aspect, the method further includes: When the application does not match the route selection policy rule, the communication apparatus receives a rejection message from the network device. The rejection message indicates that the network device rejects the request of the communication apparatus, the rejection message includes a rejection cause, and the rejection cause indicates that the application identifier of the application is different from an application identifier in the route selection policy rule, and/or that the application distinguishing parameter of the application is different from an application distinguishing parameter in the route selection policy rule, that is, the verification fails.

Based on the foregoing solution, when the application matches the route selection policy rule, the network device accepts the request of the communication apparatus, for example, sets up or modifies a session associated with the application. When the application does not match the route selection policy rule, the network device does not accept the request of the communication apparatus, for example, does not set up or modify a session associated with the application. This reduces risks that the network resource of the application in the route selection policy rule is infringed and the network node is attacked by malicious traffic.

According to a fourth aspect, a communication method is provided. The method may be performed by a network device, or may be performed by a chip or a circuit used for the network device. This is not limited in this application. For ease of description, an example in which the method is performed by the network device is used below for description.

The method includes: The network device receives a request message from a communication apparatus, where the request message includes an application identifier of the application, and the request message is used to request to verify whether the application matches a route selection policy rule; determines, based on the application identifier of the application, that the application matches the route selection policy rule; and sends a response message to the communication apparatus.

Based on the solution provided in this application, on the basis that the communication apparatus determines that the detected application matches the route selection policy rule, the additional step of requesting the network device to verify whether the application matches the route selection policy rule ensures authenticity of the application detected by the communication apparatus, prevents a network resource of the application associated with the route selection policy rule from being infringed, and reduces a risk that a network node is attacked by malicious traffic.

With reference to the fourth aspect, in some implementations of the fourth aspect, the application identifier of the application is security protected.

Based on the foregoing solution, the application identifier of the application is security protected. This can improve network communication security, prevent the application identifier of the application from being maliciously tampered with in a transmission process, and reduce risks that the network resource of the application associated with the route selection policy rule is infringed and the network node is attacked by malicious traffic.

With reference to the fourth aspect, in some implementations of the fourth aspect, the security protected application identifier of the application includes one or more of the following: a digitally signed application identifier of the application, an application identifier of the application that has been encrypted with a key, or an application identifier of the application that has been encrypted with a key.

With reference to the fourth aspect, in some implementations of the fourth aspect, the request message further includes authentication information, the authentication information includes the application identifier of the application and a digital signature used to verify the application identifier of the application, the authentication information is used to verify authenticity or integrity of the application, and the authentication information is any one of the following: the digital signature, a hash value, or a message authentication code.

Based on the foregoing solution, the authentication information is carried, so that the network device verifies authenticity or integrity of the application newly detected by the communication apparatus. This can improve network communication security, and reduce risks that the network resource of the application in the route selection policy rule is infringed and the network node is attacked by malicious traffic.

With reference to the fourth aspect, in some implementations of the fourth aspect, that the network device determines, based on an application identifier in the route selection policy rule and the application identifier of the application, that the application matches the route selection policy rule includes: The network device determines that the application identifier of the application is the same as the application identifier, of the application, in the route selection policy rule.

Based on the foregoing solution, when the application identifier of the application is the same as the application identifier in the route selection policy rule, the network device determines that the application matches the route selection policy rule. The additional step of verifying the application identifier of the application by the network device helps improve communication security in a route selection process, and reduce risks that the network resource of the application in the route selection policy rule is infringed and the network node is attacked by malicious traffic.

With reference to the fourth aspect, in some implementations of the fourth aspect, that the network device determines, based on an application identifier in the route selection policy rule and the application identifier of the application, that the application matches the route selection policy rule includes: When the application identifier of the application is digitally signed, the network device verifies the digital signature; and when the verification on the digital signature succeeds, the network device determines, based on the application identifier in the route selection policy rule and the application identifier of the application, that the application matches the route selection policy rule.

Based on the foregoing solution, the digital signature of the application identifier of the application is further verified, to improve network communication security, and reduce risks that the network resource of the application associated with the route selection policy rule is infringed and the network node is attacked by malicious traffic.

With reference to the fourth aspect, in some implementations of the fourth aspect, before the network device receives the request message from the communication apparatus, the method further includes: The network device sends first indication information to the communication apparatus, where the first indication information indicates the communication apparatus to send the application identifier of the application to the network device.

Based on the foregoing solution, sending of the first indication information may allow the communication apparatus to determine, based on the first indication information, to send the request message to the network device. The additional verification process in the route selection process helps improve network communication security, and reduce risks that the network resource of the application associated with the route selection policy rule is infringed and the network node is attacked by malicious traffic.

With reference to the fourth aspect, in some implementations of the fourth aspect, the request message is a session setup request message or a session modification request message.

Based on the foregoing solution, the application identifier of the application is carried in the session setup request message or the session modification request message, to reduce an unnecessary interaction procedure, and reduce signaling overheads.

With reference to the fourth aspect, in some implementations of the fourth aspect, the request message further includes second indication information, and the second indication information indicates that the request message carries the application identifier of the application, or the second indication information indicates the network device to verify whether the application matches the route selection policy rule. That the network device determines, based on the application identifier of the application and the application identifier in the route selection policy rule, that the application matches the route selection policy rule includes: The network device determines, based on the second indication information, the application identifier of the application, and the application identifier in the route selection policy rule, that the application matches the route selection policy rule.

Based on the foregoing solution, the second indication information may indicate the network device to verify the application identifier of the application. More verification or the additional verification process helps improve network communication security, and reduce risks that the network resource of the application associated with the route selection policy rule is infringed and the network node is attacked by malicious traffic.

With reference to the fourth aspect, in some implementations of the fourth aspect, the request message further includes an application distinguishing parameter of the application. That the network device determines, based on the application identifier of the application and the application identifier in the route selection policy rule, that the application matches the route selection policy rule includes: The network device determines, based on the application identifier of the application, the application identifier in the route selection policy rule, the application distinguishing parameter of the application, and an application distinguishing parameter in the route selection policy rule, that the application matches the route selection policy rule.

With reference to the fourth aspect, in some implementations of the fourth aspect, that the network device determines, based on the application identifier of the application, the application identifier in the route selection policy rule, the application distinguishing parameter of the application, and the application distinguishing parameter in the route selection policy rule, that the application matches the route selection policy rule includes: The network device determines that the application identifier of the application is the same as the application identifier in the route selection policy rule, and the application distinguishing parameter of the application is the same as the application distinguishing parameter in the route selection policy rule.

Based on the foregoing solution, the verification of the application distinguishing parameter of the application allows to more effectively identify authenticity of the application detected by the communication apparatus, and further determine that the application matches the route selection policy rule. This prevents the network resource of the application in the route selection policy rule from being infringed, and reduces risks that network nodes are attacked by malicious traffic.

With reference to the fourth aspect, in some implementations of the fourth aspect, the application distinguishing parameter of the application is security protected. Performing security protection on the application distinguishing parameter of the application helps effectively improve network communication security, prevent the application distinguishing parameter of the application from being maliciously tampered with in a transmission process, and reduce risks that the network resource of the application in the route selection policy rule is infringed and the network node is attacked by malicious traffic.

With reference to the fourth aspect, in some implementations of the fourth aspect, the security protected application distinguishing parameter of the application includes one or more of the following: a digitally signed application distinguishing parameter of the application, an application distinguishing parameter of the application that is encrypted with a key, or an application distinguishing parameter of the application that is hash processed.

With reference to the fourth aspect, in some implementations of the fourth aspect, before the network device receives the request message from the communication apparatus, the method further includes: The network device sends third indication information to the communication apparatus, where the third indication information indicates the communication apparatus to send the application identifier of the application and the application distinguishing parameter of the application to the network device.

Based on the foregoing solution, the communication apparatus may determine, based on the third indication information, to send the request message including the application identifier of the application and the application distinguishing parameter of the application to the network device. The additional procedure in which the network device verifies whether the application matches the route selection policy rule helps improve network communication security, and reduce risks that the network resource of the application in the route selection policy rule is infringed and the network node is attacked by malicious traffic.

With reference to the fourth aspect, in some implementations of the fourth aspect, the request message further includes fourth indication information, and the fourth indication information indicates that the request message carries the application identifier of the application and the application distinguishing parameter of the application, or the fourth indication information indicates the network device to verify whether the application matches the route selection policy rule. The network device determines, based on the application identifier of the application, the application identifier in the route selection policy rule, the application distinguishing parameter of the application, and the application distinguishing parameter in the route selection policy rule, that the application matches the route selection policy rule includes: The network device determines, based on the fourth indication information, the application identifier of the application, the application identifier in the route selection policy rule, the application distinguishing parameter of the application, and the application distinguishing parameter in the route selection policy rule, that the application matches the route selection policy rule.

Based on the foregoing solution, the fourth indication information may indicate the network device to verify the application identifier of the application and the application distinguishing parameter of the application. More verification or the additional verification process helps improve network communication security, and reduce risks that the network resource of the application in the route selection policy rule is infringed and the network node is attacked by malicious traffic.

With reference to the fourth aspect, in some implementations of the fourth aspect, when the application does not match the route selection policy rule, the network device sends a rejection message to the communication apparatus. The rejection message indicates that the network device rejects a request of the communication apparatus, the rejection message includes a rejection cause, and the rejection cause indicates that the application identifier of the application is different from the application identifier in the route selection policy rule, and/or that the application distinguishing parameter of the application is different from the application distinguishing parameter in the route selection policy rule.

With reference to the fourth aspect, in some implementations of the fourth aspect, when the application matches the route selection policy rule, the response message indicates that the network device accepts a request of the communication apparatus.

With reference to the fourth aspect, in some implementations of the fourth aspect, when the application does not match the route selection policy rule, the method further includes: The network device sends a rejection message to the communication apparatus. The rejection message indicates that the network device rejects a request of the communication apparatus, the rejection message includes a rejection cause, and the rejection cause indicates that the application identifier of the application is different from the application identifier in the route selection policy rule, and/or the application distinguishing parameter of the application is different from the application distinguishing parameter in the route selection policy rule, that is, the verification fails.

Based on the foregoing solution, when the application matches the route selection policy rule, the network device accepts the request of the communication apparatus, for example, sets up or modifies a session associated with the application. When the application does not match the route selection policy rule, the network device does not accept the request of the communication apparatus, for example, does not set up or modify a session associated with the application. This reduces risks that the network resource of the application associated with the route selection policy rule is infringed and the network node is attacked by malicious traffic.

According to a fifth aspect, a communication method is provided. The method may be performed by a communication apparatus, or may be performed by a chip or a circuit used in the communication apparatus. This is not limited in this application. For ease of description, the following uses an example in which the method is performed by the communication apparatus for description. The communication apparatus includes an operating system and a modem.

The method includes: The operating system receives a first parameter from an application, where the first parameter includes one or more of the following: a temporary identifier, a temporary key, or an access token; determines a second application identifier and a second application distinguishing parameter of the application based on the first parameter; and sends the second application identifier to the modem. The modem determines, based on the second application identifier and a first application identifier, that the application matches a route selection policy rule, where the route selection policy rule includes the first application identifier.

Optionally, the operating system may further determine a second application distinguishing parameter of the application based on the first parameter, and sends the second application distinguishing parameter to the modem. The modem determines, based on the second application distinguishing parameter and a first application distinguishing parameter, that the application matches a route selection policy rule, where the route selection policy rule includes the first application distinguishing parameter.

With reference to the fifth aspect, in some implementations of the fifth aspect, that the modem determines, based on the second application identifier and the first application identifier, that the application matches the route selection policy rule includes: The modem determines that the second application identifier is the same as the first application identifier.

Optionally, the modem may further determine, based on the second application distinguishing parameter and the first application distinguishing parameter, that the application matches the route selection policy rule. For example, the modem determines that the second application distinguishing parameter is the same as the first application distinguishing parameter.

Based on the solution provided in this application, the operating system verifies the second application identifier (optionally, the operating system alternatively verifies the second application distinguishing parameter) of the application, to determine authenticity or integrity of the application. This reduces or avoids potential security risks terminal devices may encounter in a route selection process. When the first application identifier is the same as the second application identifier, the modem determines that the application matches the route selection policy rule. This can reduce or avoid a potential security risk that may be encountered by the terminal device in the route selection process.

With reference to the fifth aspect, in some implementations of the fifth aspect, that the operating system determines the second application identifier based on the first parameter includes: The operating system determines the second application identifier based on the temporary identifier and a mapping relationship, where the mapping relationship indicates an association relationship between the second application identifier and the temporary identifier; or the operating system determines the second application identifier based on the temporary key or the access token.

Optionally, that the operating system may further determine the second application distinguishing parameter based on the first parameter includes: The operating system determines the second application distinguishing parameter based on the temporary identifier and a mapping relationship, where the mapping relationship indicates an association relationship between the second application distinguishing parameter and the temporary identifier; or the operating system determines the second application distinguishing parameter based on the temporary key or the access token.

With reference to the fifth aspect, in some implementations of the fifth aspect, that the operating system receives the first parameter from the application includes: When the application is activated or used, the operating system receives the first parameter from the application.

With reference to the fifth aspect, in some implementations of the fifth aspect, before the operating system receives the first parameter from the application, the method further includes: The operating system generates the first parameter, and sends the first parameter to the application. When the first parameter is the temporary identifier, the operating system stores the mapping relationship.

For beneficial effect of the fifth aspect and some implementations of the fifth aspect, correspondingly refer to related descriptions of the first aspect. Details are not described herein again.

According to a sixth aspect, a communication method is provided. The method may be performed by a communication apparatus, or may be performed by a chip or a circuit used in the communication apparatus. This is not limited in this application. For ease of description, the following uses an example in which the method is performed by the communication apparatus for description. The communication apparatus includes an operating system.

The method includes: An application receives a first parameter from the operating system, where the first parameter includes one or more of the following: a temporary identifier, a temporary key, or an access token; and when the application is activated or used, the application sends the first parameter to the operating system.

Based on the solution provided in this application, the first parameter is sent, so that the operating system can subsequently verify the second application identifier and the second application distinguishing parameter of the application, to determine authenticity or integrity of the application. This reduces or avoids potential security risks terminal devices may encounter in a route selection process.

According to a seventh aspect, a communication method is provided. The method may be performed by a communication apparatus, or may be performed by a chip or a circuit used in the communication apparatus. This is not limited in this application. For ease of description, an example in which the method is performed by the communication apparatus is used below for description.

The method includes: The communication apparatus sends an authentication request message to a user, where the authentication request message includes a second application identifier of an application, and the authentication request message is used to request to verify the second application identifier; receives an authentication response message from the user, where the authentication response message includes a verification result of the second application identifier; and determines, based on the authentication response message, that the application matches a route selection policy rule.

Based on the solution provided in this application, the authentication request message is sent to the user, to request the user to verify the second application identifier, and it is determined based on identification and verification results obtained by the user that the application matches the route selection policy rule. This reduces or avoids potential security risks terminal devices may encounter in a route selection process.

Optionally, the authentication request message further includes a second application distinguishing parameter of the application. In this case, the authentication request message is further used to request to verify the second application distinguishing parameter, and the authentication response message further includes a verification result of the second application distinguishing parameter. The communication apparatus determines, based on the second application identifier and the second application distinguishing parameter of the application, that the application matches the route selection policy rule.

In another implementation, the method includes: The communication apparatus sends the authentication request message to the user, where the authentication request message includes the second application identifier of the application, and the authentication request message is used to request to determine whether the second application identifier matches a first application identifier in the route selection policy rule; receives the authentication response message from the user, where the authentication response message includes a first matching result of the second application identifier and the first application identifier; and determines, based on the authentication response message, that the application matches the route selection policy rule.

Optionally, the authentication request message further includes the second application distinguishing parameter of the application, the authentication request message is further used to request to determine whether the second application distinguishing parameter matches the first application distinguishing parameter in the route selection policy rule, and the authentication response message further includes a second matching result between the second application distinguishing parameter and the first application distinguishing parameter. The communication apparatus determines, based on the authentication response message, that the application matches the route selection policy rule.

Based on the solution provided in this application, the authentication request message is sent to the user, to request the user to determine whether the second application identifier matches the first application identifier and whether the second application distinguishing parameter matches the first application distinguishing parameter, and it is determined based on identification and verification results obtained by the user that the application matches the route selection policy rule. This reduces or avoids a potential security risk that may be encountered by the terminal device in the route selection process.

For beneficial effect of the seventh aspect and some implementations of the seventh aspect, correspondingly refer to related descriptions of the first aspect. Details are not described herein again.

According to an eighth aspect, a communication apparatus is provided. The apparatus includes a processing unit, configured to: when detecting an application, determine, based on a second application identifier and a second application distinguishing parameter of the application, that the application matches a route selection policy rule, where the route selection policy rule includes a first application identifier and a first application distinguishing parameter. The processing unit is further configured to associate the application with a session according to the route selection policy rule.

A transceiver unit may perform receiving and sending in the first aspect, and the processing unit may perform processing other than receiving and sending in the first aspect.

According to a ninth aspect, a communication apparatus is provided. The apparatus includes: a processing unit, configured to obtain a route selection policy rule, where the route selection policy rule includes a first application identifier and a first application distinguishing parameter; and a transceiver unit, configured to send the route selection policy rule to the communication apparatus.

The transceiver unit may perform receiving and sending in the second aspect, and the processing unit may perform processing other than receiving and sending in the second aspect.

According to a tenth aspect, a communication apparatus is provided. The apparatus includes: a processing unit, configured to: when detecting an application, determine that the application matches a route selection policy rule; and a transceiver unit, configured to send a request message to a network device, where the request message includes an application identifier of the application, and the request message is used to request to verify whether the application matches the route selection policy rule. The transceiver unit is further configured to receive a response message from the network device.

The transceiver unit may perform receiving and sending in the third aspect, and the processing unit may perform processing other than receiving and sending in the third aspect.

According to an eleventh aspect, a communication apparatus is provided. The apparatus includes: a transceiver unit, configured to receive a request message from the communication apparatus, where the request message includes an application identifier of an application, and the request message is used to request to verify whether the application matches a route selection policy rule; and a processing unit, configured to determine, based on an application identifier in the route selection policy rule and the application identifier of the application, that the application matches the route selection policy rule. The transceiver unit is further configured to send a response message to the communication apparatus.

The transceiver unit may perform receiving and sending in the fourth aspect, and the processing unit may perform processing other than receiving and sending in the fourth aspect.

According to a twelfth aspect, a communication apparatus is provided. The apparatus includes: a transceiver unit, configured to receive a first parameter from an application, where the first parameter includes one or more of the following: a temporary identifier, a temporary key, or an access token; and a processing unit, configured to determine a second application identifier and a second application distinguishing parameter of the application based on the first parameter. The second application identifier and the second application distinguishing parameter are sent by an operating system to a modem. The processing unit is further configured to determine, based on the second application identifier, a first application identifier in a route selection policy rule, the second application distinguishing parameter, and a first application distinguishing parameter in the route selection policy rule, that the application matches the route selection policy rule.

The transceiver unit may perform receiving and sending in the fifth aspect, and the processing unit may perform processing other than receiving and sending in the fifth aspect.

According to a thirteenth aspect, a communication apparatus is provided. The apparatus includes: a transceiver unit, configured to receive a first parameter from an operating system, where the first parameter includes one or more of the following: a temporary identifier, a temporary key, or an access token. The transceiver unit is further configured to: when the application is activated or used, send the first parameter to the operating system.

The transceiver unit may perform receiving and sending in the sixth aspect, and the processing unit may perform processing other than receiving and sending in the sixth aspect.

According to a fourteenth aspect, a communication apparatus is provided. The apparatus includes: a transceiver unit, configured to send an authentication request message to a user. The authentication request message includes a second application identifier and a second application distinguishing parameter of an application, and the authentication request message is used to request the user to verify the second application identifier and the second application distinguishing parameter, or determine whether the second application identifier matches a first application identifier in a route selection policy rule and whether the second application distinguishing parameter matches a first application distinguishing parameter in the route selection policy rule. The transceiver unit is further configured to receive an authentication response message from the user. The authentication response message includes a verification result of the second application identifier and the second application distinguishing parameter, or a first matching result of the second application identifier and the first application identifier and a second matching result of the second application distinguishing parameter and the first application distinguishing parameter. That the communication apparatus determines, based on the second application identifier and the second application distinguishing parameter of the application, that the application matches the route selection policy rule includes: The communication apparatus determines, based on the authentication response message, that the application matches the route selection policy rule.

The transceiver unit may perform receiving and sending in the seventh aspect, and the processing unit may perform processing other than receiving and sending in the seventh aspect.

According to a fifteenth aspect, a communication apparatus is provided, and includes a processor. The processor is coupled to a memory, the memory is configured to store a computer program, and the processor is configured to invoke the computer program from the memory and run the computer program, to cause the communication apparatus to perform the method in the first aspect and any possible implementation of the first aspect, the third aspect and any possible implementation of the third aspect, the fifth aspect and any possible implementation of the fifth aspect, or the seventh aspect and any possible implementation of the seventh aspect; or cause a network device to perform the method in the second aspect and any possible implementation of the second aspect or the fourth aspect and any possible implementation of the fourth aspect.

Optionally, there are one or more processors, and there are one or more memories.

Optionally, the memory may be integrated with the processor, or the memory and the processor are separately disposed.

Optionally, the communication apparatus further includes a transceiver.

According to a sixteenth aspect, a communication system is provided, and includes one or more of a terminal device, a network device, an operating system, an application, or a modem.

According to a seventeenth aspect, a computer-readable storage medium is provided. The computer-readable storage medium stores a computer program or code. When the computer program or code is run on a computer, the computer is caused to perform the methods in the first aspect to the seventh aspect and any possible implementation of the first aspect to the seventh aspect.

According to an eighteenth aspect, a chip is provided, and includes at least one processor. The at least one processor is coupled to a memory, the memory is configured to store a computer program, and the processor is configured to invoke the computer program from the memory and run the computer program, to cause a terminal device on which the chip system is mounted to perform the method in the first aspect and any possible implementation of the first aspect, the third aspect and any possible implementation of the third aspect, the fifth aspect and any possible implementation of the fifth aspect, or the seventh aspect and any possible implementation of the seventh aspect; or cause a network device on which the chip system is mounted to perform the method in the second aspect and any possible implementation of the second aspect or the fourth aspect and any possible implementation of the fourth aspect; or cause an application on which the chip system is mounted to perform the method in the third aspect and any possible implementation of the third aspect.

The chip may include an input circuit or interface for sending information or data and an output circuit or interface for receiving information or data.

According to a nineteenth aspect, a computer program product is provided. The computer program product includes computer program code, and when the computer program code is run, the methods in the first aspect to the seventh aspect and any possible implementation of the first aspect to the seventh aspect are performed.

### BRIEF DESCRIPTION OF DRAWINGS

FIG. 1 is a diagram of a structure of a network architecture according to an embodiment of this application;
FIG. 2 is a schematic flowchart in which UE receives a URSP according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a schematic flowchart of a communication method 1000 according to an embodiment of this application;
FIG. 11 is a diagram of a structure of a communication apparatus 2000 according to an embodiment of this application;
FIG. 12 is a diagram of a structure of a communication apparatus 3000 according to an embodiment of this application; and
FIG. 13 is a diagram of a structure of a chip system 4000 according to an embodiment of this application.

### DESCRIPTION OF EMBODIMENTS

The following describes technical solutions in this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of things (Internet of things, IoT) communication system, or another communication system.

In a communication system, a part operated by an operator may be referred to as a public land mobile network (public land mobile network, PLMN), also known as an operator network or the like. The PLMN is a network established and operated by a government or an authorized operator to provide terrestrial mobile communication services for the public, primarily serving as a public network in which mobile network operators (mobile network operator, MNO) provide mobile broadband access services for users. The PLMN described in embodiments of this application may be specifically a network compliant with 3rd generation partnership project (3rd generation partnership project, 3GPP) standard requirements, abbreviated as a 3GPP network. The 3GPP network usually includes but is not limited to a 5th generation (5th generation, 5G) mobile communication network, a 4th generation (4th generation, 4G) mobile communication network, and another future communication system like a (6th generation, 6G) network.

For ease of description, the PLMN or the 5G network is used as an example for description in embodiments of this application.

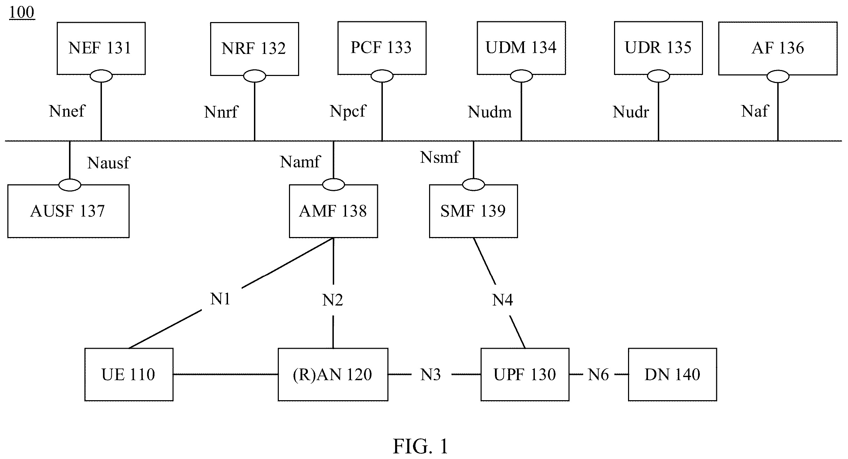

FIG. 1 is a diagram of a structure of a network architecture 100 according to an embodiment of this application. A 5G network architecture based on a service-based architecture SBA in a non-roaming scenario defined in a 3GPP standardization process is used as an example. As shown in FIG. 1, the network architecture may include three parts: a terminal device part, a data network DN part, and an operator network PLMN part. The following briefly describes functions of network elements of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 120. The terminal device 110 may also be referred to as an access terminal, a terminal, a subscriber unit, a subscriber station, a mobile station, a mobile console, a remote station, a remote terminal, a mobile device, a user terminal, a user agent, a user apparatus, or the like. The terminal device 110 may be deployed on land, including an indoor device, an outdoor device, a handheld device, or a vehicle-mounted device; or may be deployed on water (for example, on a ship); or may be deployed in the air (for example, on an aircraft, a balloon, or a satellite). The terminal device 110 may be a cellular phone (cellular phone), a cordless telephone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the Internet of things or Internet of vehicles, a terminal in any form in a 5G network or a future network, relay user equipment, a terminal in a 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to the (radio) access network ((radio) access network, (R)AN) 120 and the core network (core network, CN) part.

The (R)AN 120 may be considered as a sub-network of the operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small cell base station device (pico), a mobile switching center, a network device in a future network, or the like. In systems using different radio access technologies, devices having access network device functions may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (network function, NF): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, an application function (application function, AF) 136, an authentication server function (authentication server function, AUSF) 137, an access and mobility management function (access and mobility management function, AMF) 138, and a session management function (session management function, SMF) 139.

The data network DN 140, also known as a packet data network (packet data network, PDN), is usually a network located outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of DNs 140, and a plurality of services may be deployed on the DN 140, to provide services such as a data service and/or a voice service for the terminal device 110. For example, the DN 140 may be a private network of a smart factory, a sensor installed in a workshop of the smart factory may be the terminal device 110, a control server of the sensor is deployed in the DN 140, and the control server may provide a service for the sensor. The sensor may communicate with the control server to obtain instructions of the control server, transmit collected sensor data to the control server according to the instructions, and the like. For another example, the DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may access the DN 140 through the operator network, and use an operator service deployed on the DN 140 and/or a service provided by a third party.

The following further briefly describes NF functions included in the CN.
1. The UPF 130 is a gateway provided by the operator, serving as a gateway for communication between the operator network and the DN 140. The UPF network function 130 includes user plane-related functions including data packet routing and transmission, data packet inspection, traffic usage reporting, quality of service (quality of service, QoS) handling, lawful intercept, uplink data packet detection, and downlink data packet storage, and the like.
2. The NEF 131 is a control plane function provided by the operator, mainly enables third parties to use services provided by a network, and supports the network in exposing capabilities, events and data analysis of the network, providing security configuration information for a PLMN from an external application, translation of information exchanged inside and outside the PLMN, and the like.
3. The NRF 132 is a control plane function provided by an operator, and may be configured to maintain real-time information of network functions and services in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to policy rules and policy decisions for another control function, and the like.
5. The UDM 134 is a control plane function provided by an operator, and is responsible for storage of subscription permanent identifiers (subscriber permanent identifier, SUPI) of subscribers of the operator network, generic public subscription identifiers (generic public subscription identifier, GPSI) of subscribers, credentials (credential), and other information. The SUPI is first encrypted during transmission, where the encrypted SUPI is referred to as a subscription concealed identifier (subscription concealed identifier, SUCI). The information stored in the UDM network function 134 may be used for authentication and authorization when the terminal device 110 accesses the operator network. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that, for ease of description, information such as the permanent identifier, the credential, a security context, authentication data (cookie), and a token related to verification/authentication and authorization is not limited or distinguished in embodiments of this application.
6. The UDR 135 is a control plane function provided by an operator, and provides a function of storing and obtaining subscription data for the UDM, provides a function of storing and obtaining policy data for the PCF, stores and obtains NF group ID (group ID) information of a user, and the like.
7. The AF 136 is a control plane function provided by the operator, and mainly interacts with another NF in the PLMN to provide a corresponding service, for example, provide visited network selection information for roaming UE, guide routing of a data flow, and access the NEF 131. The AF may be deployed inside the PLMN by the operator or outside the operator network.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber based on authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, user authentication and authorization, and the like.
10. The SMF 139 is a control plane network function provided by the operator network, and is responsible for managing a protocol data unit PDU session of the terminal device 110. The PDU session is a channel used to transmit PDUs, and the terminal device and the DN 140 need to transmit the PDU to each other via the PDU session. The SMF network function 139 is responsible for setup, maintenance, deletion, and the like of the PDU session. The SMF network function 139 includes session-related functions such as session management (for example, session setup, modification, and release, including tunnel maintenance between the user plane function UPF 130 and the (R)AN 120), selection and control of the UPF network function 130, service and session continuity (service and session continuity, SSC) mode selection, and roaming.

It may be understood that the foregoing network elements or functions may be physical entities in a hardware device, software instances running on dedicated hardware, or virtualized functions instantiated on a sharing platform (for example, a cloud platform). Briefly, an NF may be implemented by hardware or software.

In FIG. 1, Nnef, Nnrf, Npcf, Nudm, Nudr, Naf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in FIG. 1 are merely examples. During specific implementation, the interface names of the system architecture may be alternatively other names. This is not limited in this application. In addition, a name of a message (or signaling) transmitted between the network elements is merely an example, and does not constitute any limitation on a function of the message.

For ease of description, in embodiments of this application, network functions (such as the NEF 131, ..., and the SMF 139) are collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture 100 applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application. In the service-based architecture, the PLMN may orderly combine some or all network functions as required based on a specific scenario requirement, to implement customization of a network capability and a service, to deploy dedicated networks for different services, that is, implement 5G network slicing (network slicing). With a network slicing technology, the operator can respond to customer requirements more flexibly and quickly and support flexible allocation of network resources.

The network slicing (abbreviated as slicing) may be understood as dividing a physical network of the operator into a plurality of virtual end-to-end networks, and virtual networks (including devices, access networks, transport networks, and core networks in the networks) are logically independent of each other, to prevent faults in any virtual network from affecting another virtual network. To meet diversified requirements and isolation between slices, independent management and operation and maintenance of services need to be performed, and customized service functions and analysis capabilities need to be provided. Instances of different service types may be deployed on different network slices, or different instances (instances) of a same service type may also be deployed on different network slices. A slice may include a group of NFs and/or sub-networks. For example, a slice may include a sub-network (R)AN 150, the AMF 137, the SMF 138, and the UPF 139 in FIG. 1. It may be understood that only one network function of each type is schematically illustrated in FIG. 1. During actual network deployment, there may be a plurality of or dozens of network functions or sub-networks of each type. A plurality of slices may be deployed in the PLMN. All slices may have different performance to meet requirements of different applications and vertical industries. The operator may "customize" a slice based on requirements of customers from the different vertical industries.

Usually, information identifying the slice is network slice selection assistance information (network slice selection assistance information, NSSAI). The NSSAI is actually a list or a set that includes one or more pieces of single network slice selection assistance information (single NSSAI, namely, S-NSSAI). One piece of S-NSSAI is used to identify one network slice, that is, it may be understood that the S-NSSAI is identification information of the slice.

It should be further understood that the AMF, the SMF, the UPF, the NEF, the AUSF, the NRF, the PCF, and the UDM shown in FIG. 1 may be understood as network elements configured to implement different functions in a core network, for example, may be combined as required to form a network slice. The network elements of the core network may be independent devices, or may be integrated into a same device to implement different functions. Specific forms of the network elements are not limited in this application.

It should further be understood that the names are defined only for ease of distinguishing different functions, and should not constitute any limitation on this application. This application does not exclude a possibility that another name is used in the 5G network and another future network. For example, in a 6G network, some or all of the network elements may continue to use terms in 5G, or may use other names or the like.

For ease of description, in embodiments of this application, the session management function SMF 139 is referred to as an SMF for short, the terminal device 110 is referred to as UE, and the policy control function PCF 133 is referred to as a PCF for short. In other words, the SMF described below in embodiments of this application may be replaced with a session management function, the PCF may be replaced with a policy control function, and the UE may be replaced with a terminal device.

For ease of understanding the technical solutions of this application, a route selection policy (UE route selection policy, URSP) is first briefly described.

The URSP may be pre-configured by the operator in the UE, or may be dynamically delivered to the UE via the PCF. Further, the UE determines, according to a URSP rule in the URSP, a path through which data traffic of the UE is sent over a network. For example, the UE may select, according to the URSP rule, a PDU session that is currently connected to a DN to send the data traffic of the UE; or the UE may set up a new PDU session in a specific network slice to send the data traffic of the UE.

It should be understood that the URSP is usually defined as a list in a standard. The list includes one or more rules (rules), for example, a URSP rule 1 shown in Table 1. Different rules have different precedence and a series of parameters related to route selection. Specifically, one URSP rule includes the following three (or three groups of) parameters: rule precedence (rule precedence), a traffic descriptor (traffic descriptor), and a list of route selection descriptors (route selection descriptors).
(1) The rule precedence is a single-value parameter that represents a precedence order.
(2) The traffic descriptor is an attribute used to determine traffic, and includes one or a group of sub-parameters: an application descriptor (application descriptor), an internet protocol (internet protocol, IP) descriptor, a domain (domain) descriptor, a non-IP descriptor, a data network name (DN Name, DNN), and connection capabilities (connection capabilities). The application descriptor is used to identify an application program and an operating system (operating system, OS) of the application program. The OS includes two parameters: an operating system ID (OSId) and an operating system application ID (OSAppId) that respectively identify an operating system (OS) of UE that runs the application program and the application program. Because the application descriptor is insufficient to uniquely identify traffic of the application program, it is recommended that other identification information be introduced in this application, for example, information such as an App Store of an application program for installation. Usually, an application program released in an application store may be uniquely identified in the application store. It should be noted that the operating system ID (OSId) and the operating system application ID (OSAppId) are application descriptors and are used to distinguish between different applications. In addition, the operating system ID and the operating system application ID are also parameters of the traffic descriptor, and may also be used to distinguish between different traffic or between traffic of different applications. In this application, whether the operating system ID and the operating system application ID are used to distinguish between applications or application traffic is not strictly distinguished.
(3) The list of route selection descriptors includes one or more route selection descriptors, and each route selection descriptor may include route selection descriptor precedence, route selection components, and route selection validation criteria. The route selection components may include a sub-parameter, for example, network slice selection (network slice selection) and DNN selection (DNN selection), to limit a route (a slice, a DN, or the like).

When the UE newly detects an application or when the UE detects a new application, the UE evaluates whether the application matches the traffic descriptor in the URSP rule, that is, determines whether the URSP rule is applicable to or matches the application. For example, the UE may detect the application by using an application detection filter to identify a packet header or a payload of an application traffic data packet. Alternatively, the UE may detect the application based on another method, and a method for the UE to perform detection is not limited in this application. If the application matches the traffic descriptor, the UE selects a corresponding route selection descriptor in the URSP rule to route traffic of the application. In other words, if the route selection descriptor matches an existing PDU session, the UE may associate the application with the PDU session, that is, when determining that the newly detected application matches the URSP rule, the UE may map the traffic of the newly detected application to a slice or a data network in the URSP rule based on the PDU session. If the route selection descriptor does not match the existing PDU session, the UE attempts to set up a new PDU session that matches the route selection descriptor. In other words, the UE may initiate a procedure for setting up a new PDU session to the network side. After setup of the new PDU session is completed, the UE matches the newly setup PDU session with the route selection descriptor, and associates the newly detected application with the newly setup PDU session. Alternatively, the UE may match a modified PDU session with the route selection descriptor in a PDU session modification procedure, and associate the newly detected application with the modified PDU session. It should be noted that a manner in which the newly detected application is associated with the PDU session (for example, based on the existing PDU session, or the newly setup or modified PDU session) is not specifically limited in this application.

For ease of description, unless otherwise specified, a communication apparatus matching a newly detected application with an existing PDU session, or matching a newly detected application with a newly setup or modified PDU session is uniformly described as that the UE associates the application with the session in the following.

For example, it is assumed that an application is installed on the UE, and an application ID of the application is App1. The operator delivers a URSP to the UE via the PCF, and the URSP includes one URSP rule shown in Table 1. When the UE runs the application App1, the UE triggers identification of the application App1. When the UE correctly identifies that the application ID of the application is App1, the UE may evaluate whether the URSP rule matches the application. It can be learned from Table 1 that the application App1 matches an application descriptor=App1 in a rule 1. Further, the UE may perform corresponding route selection for the application App1 according to the URSP rule 1. For example, the UE maps traffic of the application App1 to a corresponding slice S-NSSAI-1 and a data network DNN1. Optionally, if another application is further installed on the UE, for example, an application whose ID is App2, the operator may deliver, to the UE via the PCF, a URSP rule 2 corresponding to the application App2. When the UE runs App1 and App2, and the UE determines that App1 matches the URSP rule 1, and App2 matches the URSP rule 2, the UE may sequentially map traffic of App1 and traffic of App2 to corresponding slices and data networks based on precedence of the URSP rule 1 and the URSP rule 2. Optionally, if there are currently appropriate PDU sessions for connecting App1 and App2 to corresponding slices and data networks, the UE may use the existing PDU sessions to carry traffic of the two applications. If there is currently no appropriate PDU session for connecting App1 and App2 to the corresponding slices and data networks, the UE may use a newly setup or modified PDU session to carry the traffic of the two applications.

**Table 1**

| URSP rule | Rule precedence | Traffic descriptor | List of route selection descriptors |
|---|---|---|---|
| Rule 1 | 1 | Application descriptor=App1 | Route selection descriptor precedence=1 |
| | | | Route selection components: |
| | | | • Slice selection: S-NSSAI-1 |
| | | | • DN selection: DNN 1 |

Optionally, when an application (for ease of distinguishing, the application is referred to as a "current application") is newly detected (newly detected) by the UE, the UE evaluates whether traffic of the current application matches the traffic descriptor in the URSP rule, to determine whether to execute the route selection rule in the URSP rule. If the traffic descriptor includes the application descriptor, that is, includes OSAppId and OSId, the UE obtains an application ID of the current application (which may be referred to as a "current application ID" for short), and compares an application ID of an application (for ease of distinguishing, the application is referred to as a "target application") (which may be referred to as a "target application ID" for short) included in the URSP rule with the current application ID, to determine whether the current application ID matches the target application ID.

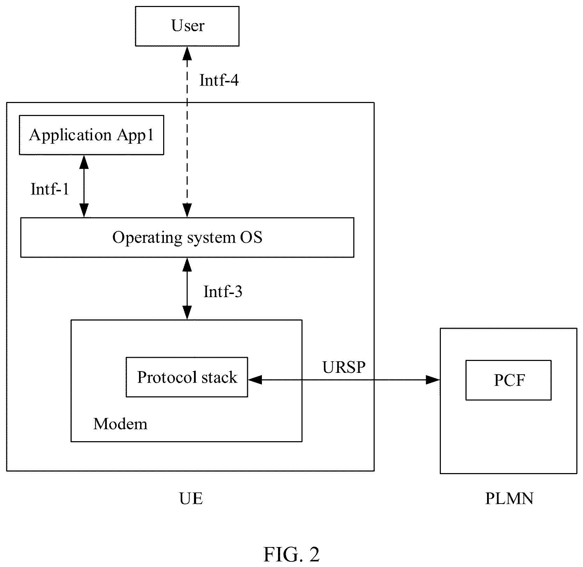

FIG. 2 is a schematic flowchart in which UE receives a URSP according to an embodiment of this application, and is described by using an example in which the application App1 is installed on the UE. As shown in FIG. 2, internal components of the UE include an OS, App1, and a modem (modem). The modem includes a protocol stack. Intf-1, Intf-3, and Intf-4 respectively represent an interface between the OS and App1, an interface between the OS and the modem, and an interface between the OS and a user (user) that uses the UE. It should be understood that an internal structure of the UE shown in FIG. 2 is merely an optional implementation method. This is not specifically limited in this application.

For example, the network PLMN (for example, the PCF) may send the URSP to the UE, and the UE may store the URSP after receiving the URSP. For specific explanations of the URSP and the URSP rule, refer to the foregoing related descriptions. For example, the URSP shown in Table 1 includes one URSP rule and a corresponding application descriptor being App1. When the UE runs the current application whose application ID is App1, App1 sends the application ID (namely, App1) of App1 to the OS through the interface Intf-1, and then the OS sends the current application ID to the modem through the interface Intf-3. Optionally, a manner in which the current application sends a message to the OS may be that the App1 actively sends the application ID of App1 to the OS, or may be that the OS triggers a request message, and App1 sends the application ID of App1 to the OS based on a response message. This is not specifically limited in this application. After obtaining the current application ID (for example, App1), the modem may compare the current application ID with the target application ID (for example, App1 shown in Table 1) included in the stored URSP rule. If the current application ID and the target application ID are the same (for example, the current application ID=App1=the target application ID), the UE may map the traffic of the detected application App1 to the slice S-NSSAI and the data network DNN that correspond to the application descriptor=App1 in the URSP rule.

The foregoing describes a process in which the UE determines whether the URSP rule matches the newly detected application, that is, determines whether the target application ID in the URSP rule is the same as the current application ID. In this implementation, there may be two security risks:
(1) An application with a same application ID as the target application is installed to forge the target application.

For an application installed on the UE, an application ID of the application is generated by a developer during development. There is neither unified specification for naming the application ID nor unified ID protection mechanism. Consequently, it may not be ensured that the application ID is unique in a same operating system (that is, OSId is the same).

For example, an application newly installed on the UE is not the target application to be matched in the URSP policy. This is equivalent to that the UE installs a "fake" application, but the "fake" application uses a same application ID as a "real" application (namely, the target application) that is to be matched and indicated in the URSP. For another example, an attacker may develop a "fake" application, and deliberately set an ID of the "fake" application to be the same as an application ID of a "real" application (namely, the target application). The "fake" applications cause a potential security risk to a network using the URSP. For example, a network resource of the "real" application may be incorrectly arranged for transmitting traffic of the "fake" application. Consequently, the network resource of the "real" application is occupied and consumed, the resource of the "real" application is infringed, and a denial of service (Denial of Service, DoS) attack may even occur on the "real" application. Alternatively, the attacker may send, in this manner of forging the target application ID, malicious traffic of the "fake" application to network nodes that store the "real" application. Consequently, the network nodes may be attacked by the malicious traffic.

(2) A forged application ID (same as the target application ID) is transmitted to forge the target application.

The modem modem or a network layer/network interface layer (referred to as "modem" for short) of the UE may obtain the application ID by using the OS of the UE. For example, the current application sends the application ID (namely, the current application ID) of the current application to the OS, and then the OS sends the current application ID to the modem. Further, the modem compares the current application ID with the target application ID included in the URSP. A malicious application may send a fake application ID to the OS, for example, a fake application ID that is the same as a "real" target application ID included in the URSP. In this case, the modem considers traffic of the detected malicious application as traffic of the "real" application (namely, the target application ID), and sends the traffic of the malicious application to the network. Consequently, the network resource of the "real" application is infringed, or the network node is attacked by the malicious traffic.

In conclusion, in the application identification process for UE route selection, the target application may be forged. Consequently, the network resource of the target application is infringed, and a potential security risk exists in network communication.

In view of this, this application provides a communication method and a communication apparatus. An application distinguishing parameter is introduced to communication of the communication apparatus, or a verification step is introduced to a network device, so that the communication apparatus and/or the network device can effectively identify or verify whether an application matches a route selection policy rule in the verification step. This ensures that the communication apparatus associates a real application with a session according to the route selection policy rule, prevents a network resource of the application in the route selection policy rule from being infringed, and reduces a risk that a network node is attacked by malicious traffic.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between the associated objects. "At least one of the following items (pieces)" or a similar expression thereof refers to any combination of these items, including any combination of singular items (pieces) or plural items (pieces). For example, at least one of a, b, and c may represent: a, b, c, a and b, a and c, b and c, or a, b, and c. a, b, and c may be singular or plural.

Third, in this application, "first", "second", and various numbers (for example, #1 and #2) indicate distinguishing for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information is described as indicating A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication via signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, a "protocol" may be a standard protocol in the communication field, for example, may include a 5G protocol, an NR protocol, and a related protocol used in a future communication system. This is not limited in this application. "Predefined" may include being defined in advance, for example, being defined in a protocol. "Pre-configured" may be implemented by pre-storing corresponding code or a corresponding table in a device, or may be implemented in another manner that may indicate related information. A specific implementation thereof is not limited in this application.

Eighth, in this application, "storage" may refer to storage in one or more memories. The one or more memories may be separately disposed, or may be integrated in an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving".

Tenth, in this application, descriptions of the term "application" or "application traffic" are not strictly distinguished. For example, evaluating whether an "application" matches a traffic descriptor in a route selection policy rule may also be understood as evaluating whether "application traffic (traffic) "matches the traffic descriptor in the route selection policy rule. Similarly, in this application, whether a second application distinguishing parameter is used to distinguish between "applications" or "application traffic" is not strictly distinguished. It should be understood that both are applicable. For example, if the second application distinguishing parameter is used to distinguish "applications", the second application distinguishing parameter may be classified as a parameter of an application descriptor or an attribute of an application like the second application identifier. If the second application distinguishing parameter is used to distinguish "application traffic", the second application distinguishing parameter may be classified as a parameter of a traffic descriptor or an attribute of traffic. This is not distinguished in this application.

The following describes in detail the communication method provided in embodiments of this application with reference to the accompanying drawings. For example, the communication method may be applied to the communication system shown in FIG. 1. In embodiments of this application, an application distinguishing parameter (App Distinguisher, AppD) of a newly added application (for example, App1) is used to uniquely identify or label the application together with an application identifier of the application. In addition, the communication apparatus or the network device verifies the application identifier or the application distinguishing parameter of the application, to ensure that authenticity of the application is effectively identified. This prevents the application from being maliciously tampered with, further prevents a network resource of the application in the URSP rule from being infringed, and prevents the application from being attacked by malicious traffic.

For ease of description, in embodiments of this application, an application distinguishing parameter in the URSP rule is referred to as a first application distinguishing parameter, and an application distinguishing parameter corresponding to the application detected by the communication apparatus is referred to as a second application distinguishing parameter. Similarly, an application identifier in the URSP rule is referred to as a first application identifier, and an application identifier corresponding to the application detected by the terminal device is referred to as a second application identifier. Related parts are not repeatedly described in the following.

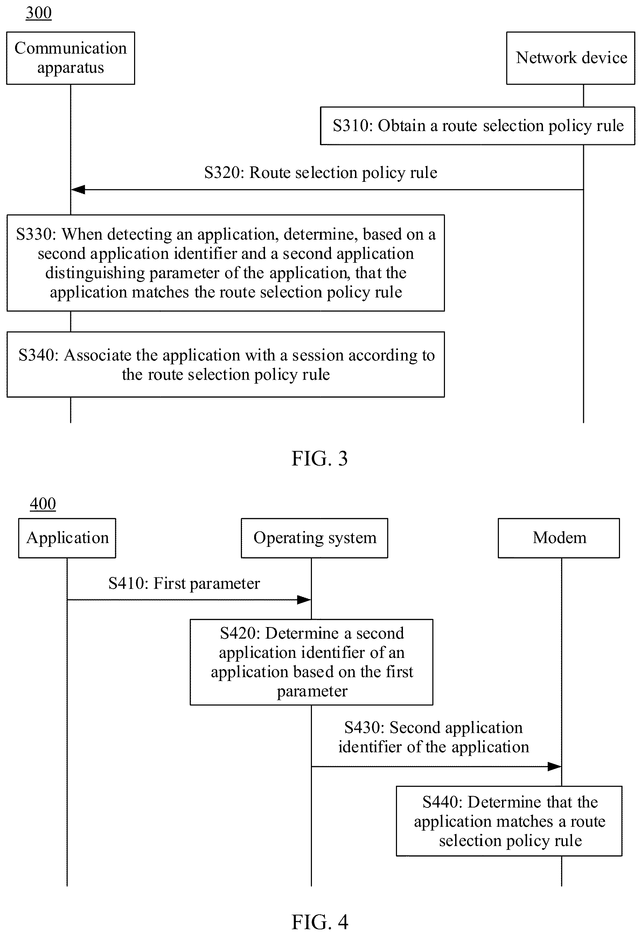

FIG. 3 is a schematic flowchart of a communication method 300 according to an embodiment of this application. As shown in FIG. 3, a communication apparatus and a network device interact as execution bodies. The method includes the following steps. For parts that are not described in detail, refer to existing protocols. It should be noted that the steps of the method 300 may be optional. In other words, when an application is activated or used, or when the communication apparatus detects the application, steps S310 to S340 are not necessarily performed, for example, step S310 or S320 may be optional. When the application is activated or used for a plurality of times, steps S340 and S340 may be performed, and steps S310 and S320 do not need to be repeatedly performed.

S310: The network device obtains a route selection policy rule.

The route selection policy rule includes a first application identifier and a first application distinguishing parameter.

For example, the route selection policy rule includes but is not limited to rule precedence, a traffic descriptor, and a list of route selection descriptors. For specific meanings of the parameters, refer to the foregoing related descriptions. For brevity, details are not described herein again.

For example, a first application identifier of the application may be AppID (for example, AppID#1) of the application, and a first application distinguishing parameter of the application may be AppD (for example, AppD#1). The first application distinguishing parameter and the first application identifier of the application are used to uniquely identify or label the application. The first application distinguishing parameter includes one or more of the following: an installer identifier of the application or an identifier of a binding platform of the application, an identifier of an application program source of the application, a name of an installation package of the application, a user identifier of the application, an identifier of a developer of the application, an identifier of a public land mobile network associated with the application, or an identifier of an application function used to generate the route selection policy rule. It should be noted that the "identifier" herein may be a name (name), an identifier (identifier), an identity (identity), a parameter value, or the like. For example, the identifier of the binding platform may also be referred to as a binding platform name or a binding platform identifier. For ease of description, the name, the identifier, and the identity are collectively referred to as identifiers in this application.
(1) Installer identifier (Installer) of the application or identifier of the binding platform of the application For example, if an application is downloaded and installed from Google Play (Google Play), a value of an Installer parameter of the application is "com.android.vending", that is, an identifier of an "installation program" or a "binding platform" of the application is Google Play. For another example, if an application is downloaded and installed from Huawei AppGallery (Huawei AppGallery), a value of an Installer parameter of the application is "com.Huawei.appmarket", that is, an identifier of an "installation program" or a "binding platform" of the application is Huawei AppGallery.
(2) Identifier of the application program source (Application source) of the application This parameter indicates a source of an application program, and usually, a value of the parameter is "pre-installed" (the value is pre-installed), "Google Play" (from Google Play), "unknown" (unknown source), or the like.
(3) Name (Package name) of the installation package of the application. The name is usually unique within a single platform.
(4) User ID (App UID) of the application The ID may not be unique within a platform.

Optionally, the first application distinguishing parameter may be a 3GPP-related parameter. For example, the 3GPP-related parameter may be a PLMN ID, an AF ID, or another parameter defined by any operator/service provider.

Optionally, the first application distinguishing parameter is further preprocessed, for example, mapping or masking is performed on the first application distinguishing parameter, to avoid leakage of sensitive information in a 3GPP system.

S320: The network device sends the route selection policy rule to the communication apparatus, and correspondingly, the communication apparatus receives the route selection policy rule from the network device.

For example, a session management function network element sends the route selection policy rule to the communication apparatus, or a policy control function network element forwards the route selection policy rule to the communication apparatus via the session management function network element. Further, the communication apparatus may determine, according to the route selection policy rule, a path through which data traffic of the application detected by the communication apparatus is sent.

Optionally, the route selection policy rule may alternatively be pre-configured by the operator in the communication apparatus.

S330: When the communication apparatus detects the application, the communication apparatus determines, based on a second application identifier and a second application distinguishing parameter of the application, that the application matches the route selection policy rule.

Optionally, a specific implementation of this step may be as follows: The communication apparatus determines, based on the second application identifier of the application and the second application distinguishing parameter, whether the application matches the route selection policy rule; and if the application matches the route selection policy rule, performs step S340; or if the application does not match the route selection policy rule, skips mapping the detected application to a slice and network in the route selection policy rule. The following describes how to determine whether the application matches the route selection policy rule.

In embodiments of this application, the application is an application newly detected by the communication apparatus, and corresponds to the foregoing current application. When it is subsequently determined that the application matches the route selection policy rule, it indicates an application (namely, the foregoing target application) in the route selection policy rule is the same as the application (namely, the foregoing current application) detected by the communication apparatus.

It should be understood that the communication apparatus detecting the application may mean that the communication apparatus is installing or running the application, or the application is transmitting data, or the communication apparatus detects data, traffic, or the like of the application. In addition, the communication apparatus determining that the application matches the route selection policy rule may mean that the communication apparatus determines that the second application identifier of the application is the same as the first application identifier in the route selection policy rule, and/or the second application distinguishing parameter of the application is the same as a second application distinguishing parameter in the route selection policy rule, and/or other parameters (for example, an Internet protocol address (Internet protocol address, IP Address) and a DNN) corresponding to the data, the traffic, and the like of the application are the same as parameters in the route selection policy rule.

For example, the second application identifier of the application may be AppID (for example, AppID#2) of the application, and the second application distinguishing parameter of the application may be AppD (for example, AppD#2). The second application distinguishing parameter includes one or more of the following: an installer identifier of the application or an identifier of a binding platform of the application, an identifier of an application program source of the application, a name of an installation package of the application, a user identifier of the application, an identifier of a developer of the application, an identifier of a public land mobile network associated with the application, or an identifier of an application function used to generate the route selection policy rule. For specific definitions of the parameters, refer to related descriptions of the first application distinguishing parameter in step S310. For brevity, details are not described herein again. It should be noted that the foregoing parameters are merely examples provided for ease of understanding, and should not constitute any limitation on the technical solutions of this application. Parameters that can be used to further distinguish the application fall within the protection scope of this application.

In embodiments of this application, a quantity of URSP rules is not limited, and there may be one or more URSP rules. Therefore, in step S320, the communication apparatus may receive one or more URSP rules from the network device, for example, a URSP rule 1 and a URSP rule 2. Each URSP rule may correspond to one application, and each URSP rule includes rule precedence, a traffic descriptor, and a list of route selection descriptors.

In a possible implementation, the communication apparatus determines, based on the second application identifier and the second application distinguishing parameter of the application, that the application matches the route selection policy rule.

For example, it is assumed that the communication apparatus receives two URSP rules: the URSP rule 1 and the URSP rule 2. The communication apparatus separately determines whether the application matches the URSP rule 1 and the URSP rule 2. For example, the communication apparatus determines whether a first application identifier in the URSP rule 1 is the same as the second application identifier of the detected application, and determines whether a first application distinguishing parameter in the URSP rule 1 is the same as the second application distinguishing parameter of the detected application. Specifically, if the first application identifier in the URSP rule 1 is the same as the second application identifier of the application, and the first application distinguishing parameter in the URSP rule 1 is the same as the second application distinguishing parameter of the application, the communication apparatus determines that the application matches the URSP rule 1. On the contrary, if the first application identifier in the URSP rule 1 is different from the second application identifier of the application, and/or the first application distinguishing parameter in the URSP rule 1 is different from the second application distinguishing parameter of the application, the communication apparatus determines that the application does not match the URSP rule 1. Similarly, the communication apparatus determines whether a first application identifier in the URSP rule 2 is the same as the second application identifier of the application, and determines whether a first application distinguishing parameter in the URSP rule 2 is the same as the second application distinguishing parameter of the application. If the first application identifier in the URSP rule 2 is the same as the second application identifier of the application, and the first application distinguishing parameter in the URSP rule 2 is the same as the second application distinguishing parameter of the application, the communication apparatus determines that the application matches the URSP rule 2. Otherwise, the communication apparatus determines that the application does not match the URSP rule 2.

For example, a modem or an operating system of the communication apparatus receives the second application identifier and the second application distinguishing parameter from the application program, and receives the URSP rule 1 from the network device, where the URSP rule 1 carries the first application identifier and the first application distinguishing parameter. It is assumed that the first application identifier and the first application distinguishing parameter are: AppID#1 and AppD#1, and the second application identifier and the second application distinguishing parameter are: AppID#2 and AppD#2. The communication apparatus determines whether the application matches the route selection policy rule, that is, compares whether AppID#1 is the same as AppID#2, and whether AppD#1 is the same as AppD#2. If AppID#1="weixin", AppID#2="QQ", and the two are different, the communication apparatus considers that the application does not match the route selection policy rule. If AppID#1=AppID#2="weixin", the communication apparatus further compares whether AppD#1 is the same as AppD#2. It is assumed that the application distinguishing parameter is determined based on Installer. For example, Installer of AppD#1 is "Huawei AppGallery", Installer of AppD#2 is "Google Play", and the two are different. In this case, the communication apparatus considers that the application does not match the route selection policy rule. For another example, Installer of AppD#1 is "Huawei AppGallery", Installer of AppD#2 is "Huawei AppGallery", and the two are the same. In this case, the communication apparatus considers that the application matches the route selection policy rule, and then associates the application with the URSP rule 1. It is assumed that the application distinguishing parameter is determined based on Installer and the application source. For example, Installer of AppD#1 is "Huawei AppGallery", the application source is "pre-installed", Installer of AppD#2 is "Google Play", the application source is "unknown", and the two are different. In this case, the communication apparatus considers that the application does not match the route selection policy rule. For another example, Installer of AppD#1 is "Huawei AppGallery", the application source is "Google Play", Installer of AppD#2 is "Huawei AppGallery", the application source is "Google Play", and the two are the same. In this case, the communication apparatus considers that the application matches the route selection policy rule.

It should be understood that the foregoing is merely an example provided for ease of understanding, and should not constitute any limitation on the technical solutions. In addition, a sequence of comparing AppID#1 and AppID#2 and comparing AppD#1 and AppD#2 is not limited in this embodiment of this application.

Optionally, before it is determined whether the detected application matches the URSP rule, if security protection is performed on AppID#2 and AppD#2 of the application, for example, adding a digital signature, key encryption processing, or hash processing, the communication apparatus may perform integrity verification or authenticity verification on AppID#2 and AppD#2. When the integrity verification or the authenticity verification succeeds, that is, when determining that AppID#2 and AppD#2 are not tampered with, the communication apparatus determines, based on AppID#2 and AppD#2, whether the detected application matches the URSP rule. A specific implementation is described above. If the verification fails or the verification does not succeed, the communication apparatus does not need to further determine whether the application matches the URSP rule.

That the communication apparatus performs authenticity or integrity verification on AppID#2 and AppD#2 may be understood as that the communication apparatus obtains or determines real AppID#2 and real AppD#2, or performs integrity verification on AppID#2 and AppD#2 of the application, to determine whether AppID#2 and AppD#2 are forged or tampered with.

It should be noted that the authenticity verification or verification of the identifier generally means that the identifier is authenticated or it is confirmed that the identifier is not forged, and the integrity verification of the identifier means that it is verified that the identifier is not tampered with. Both the authenticity verification and the integrity verification ensure that the identifier is a real identifier of the application. For ease of description, unless otherwise specified, the authenticity verification and the integrity verification are not strictly distinguished in this application.

The following specifically describes an implementation in which the communication apparatus performs authenticity or integrity verification on the second application identifier and the second application distinguishing parameter (for example, AppID#2 and AppD#2).

In a manner, the authenticity or integrity verification includes the following two steps:
(1) App Store verifies the application (for example, AppID#2 and AppD#2).

It should be understood that, after development of an application is completed, an application developer (developer) or an application publisher (publisher) usually digitally signs and/or integrity protect related file packages (including one or more files) of the application program by using a private key of the application developer or the application publisher, and App Store verifies and/or performs integrity verification on (that is, verifies whether a digital signature is forged or tampered with) the digital signature of the file package of the application program by using a public key corresponding to the private key. App Store may pre-store the public key, or may obtain the public key by receiving a digital certificate from the application developer or the application publisher. For the latter, App Store further has a capability of verifying a certificate issuer. For example, App Store pre-obtains a public key used to verify the certificate issuer, and further verifies a digital signature of the certificate by using the public key. A manner in which App Store obtains the public key of the application developer, the application publisher, or the certificate issuer is not limited in this application.

For example, the application developer or the application publisher first performs a hash operation on the file package of the application program according to a hash function (also known as a hashing function). For example, the hash function may be HMAC-SHA256. Then, the application developer or the application publisher encrypts, by using the private key of the application developer or the application publisher, a hash value (a hashing value, also known as digest or digest) generated through the operation, and sends an encrypted ciphertext together with the file package of the application program to App Store. The foregoing process of generating the hash value based on the file package may be briefly referred to as hash processing on the file package. The hash processing may also include the foregoing encryption process. This is not limited in this application.

After receiving the file package and the ciphertext of the application program, App Store performs a hash operation on the file package of the application program according to the same hash function (for example, HMAC-SHA256), to obtain a hash value; and decrypts the received ciphertext by using the stored/obtained public key, to obtain another hash value. App Store verifies authenticity or integrity of the file package of the application by comparing whether the two hash values are the same, that is, determines whether the application is from the real application developer or application publisher (that has the corresponding private key, and signs the application by using the private key).

It should be noted that the procedure in which App Store verifies the application by verifying the digital signature is merely an example provided for ease of understanding, and does not constitute any limitation on the technical solutions. Optionally, App Store may alternatively have another verification manner, for example, performing verification based on a hash-based message authentication code (that is, Hash-based Message Authentication Code, HMAC) or simply based on a hash operation. For example, the application developer or the application publisher may perform an operation on the file package of the application program by using a shared key and an HMAC function, to generate a message authentication code (message authentication code, MAC) (a process of generating the message authentication code may also be referred to as hash processing on the file package, and this is not limited in this application), and send the message authentication code to App Store together with the file package of the application program. App Store performs a hash operation on the file package of the application program by using the same shared key and the HMAC function, and compares an operation result with the received MAC. If the operation result and the received MAC are the same, it may be determined that the verification on the digital signature and/or the integrity verification on the file package of the application program succeeds. A manner in which App Store obtains the shared key is not limited in this application. For another example, if a trust relationship is established between App Store and the application developer, App Store considers, based on the trust relationship, by default that the application has been authenticated.

It should be further noted that the verification performed by App Store on the target application is not within a control range of the communication apparatus, that is, the UE does not perform an additional operation. In this embodiment of this application, if AppID#1 in the URSP rule includes a parameter (for example, Installer) related to App Store, it may be considered that App Store indicated by the parameter has verified the target application, or a trust relationship is established with the developer of the target application or the publisher of the target application. It may be considered by default that the verification in step (1) has been performed on the target application. During actual application, the operator may specify, based on the parameter (for example, Installer) that is related to App Store and that is in the URSP rule, App Stores trusted by the operator, that is, App Stores verify the target application by default.

(2) The OS verifies the application platform/store (App Store).

The OS of the communication apparatus may verify App Store in a plurality of manners, which are not limited in this application.

For example, App Store may be pre-installed on the communication apparatus, and is verified by default. For another example, a public key used to verify App Store may be pre-configured on the communication apparatus, or the communication apparatus may obtain a public key from a certificate in an installation package when installing App Store. A manner in which the communication apparatus obtains the public key of App Store is not limited in this application. Optionally, if the communication apparatus further verifies authenticity of the certificate of App Store, the communication apparatus further obtains a public key of a certificate issuer of App Store, and verifies authenticity of the certificate of App Store by using the public key of the certificate issuer. A manner in which the UE obtains the public key of the certificate issuer of App Store is not limited in this application either. For a specific implementation in which the OS of the communication apparatus verifies App Store, refer to related descriptions of the verification process of the digital signature in the foregoing step (1). In other words, the digital signature of the application developer or the application publisher in the step (1) is replaced with a digital signature of App Store, and App Store that performs verification in the step (1) is replaced with the OS. For brevity, details are not described herein.

In another manner, the communication apparatus (or the OS) may directly verify the application. For example, the file package of the current application includes a digital certificate of the application. The digital certificate includes a public key used to verify integrity of the application, information about a certificate authority (certificate authority, CA) that issues the certificate, and a signature of the CA for the public key. It should be understood that a prerequisite for using this manner is that the communication apparatus can trust the CA, or the communication apparatus can verify authenticity of the CA. Further, the communication apparatus may verify integrity of the file package (including AppID, or AppID and AppD) by using the public key, of the application, in the certificate. In addition, the communication apparatus may verify authenticity of the public key by using the information about the CA in the certificate. For a specific implementation in which the communication apparatus directly verifies the digital certificate of the application, refer to related descriptions of the verification process of the digital signature in the step (1). For brevity, details are not described herein again. It should be noted that a method for verifying AppID or AppID and AppD by the communication apparatus is not specifically limited in this application.

S340: The communication apparatus associates the application with a session according to the route selection policy rule.

It should be understood that, when detecting a new application, the communication apparatus evaluates whether the application matches the traffic descriptor in the route selection policy rule, that is, determines whether the route selection policy rule is applicable to or matches the application. If the application matches the traffic descriptor, the communication apparatus selects a corresponding route selection descriptor in the route selection policy rule to route traffic of the application. In other words, if the route selection descriptor matches an existing PDU session, the UE may associate the application with the PDU session, that is, when determining that the newly detected application matches the URSP rule, the UE may map the traffic of the newly detected application to a slice or a data network in the URSP rule based on the PDU session. If the route selection descriptor does not match the existing PDU session, the UE attempts to set up a new PDU session that matches the route selection descriptor. In other words, the UE may initiate a procedure for setting up a new PDU session to the network side. After setup of the new PDU session is completed, the UE matches the newly setup PDU session with the route selection descriptor, and associates the newly detected application with the newly setup PDU session. Alternatively, the UE may match a modified PDU session with the route selection descriptor in a PDU session modification procedure, and associate the newly detected application with the modified PDU session. In other words, associating the application with the PDU session may mean that the communication apparatus may determine, based on the matched route selection policy rule, a path through which data traffic of the communication apparatus is sent. For example, the communication apparatus selects, according to the route selection policy rule, an existing session connected to a DNN to send the data traffic of the communication apparatus; or the communication apparatus sends the data traffic of the communication apparatus by setting up a new session in a specific network slice.

In the solutions provided in this application, the application distinguishing parameter is introduced to a process of interaction between the network device and the communication apparatus, that is, the application newly detected by the communication apparatus is further identified and verified, so that in addition to verifying the application identifier, the communication apparatus further verifies the application distinguishing parameter. This can more effectively identify or verify whether the application matches the route selection policy rule. For example, newly installed applications of the communication apparatus are not applications that match the URSP rule. However, because the applications have a same application identifier, the newly installed applications may be mistaken as "real" applications, and the "fake" applications cause a potential security risk to a network using the URSP rule. For example, a network resource of the "real" application may be incorrectly arranged for transmitting traffic of the "fake" application. Consequently, the network resource of the "real" application in the route selection policy rule is occupied and consumed, the resource of the "real" application is infringed, and a denial of service (Denial of Service, DoS) attack may even occur on the "real" application, or an attacker sends the malicious traffic of the "fake" applications to network nodes that store the "real" applications, and the network nodes may be attacked by the malicious traffic. Therefore, in this manner in which the application distinguishing parameter is further verified and identified, risks that the network resource of the application in the route selection policy rule is infringed and the network node is attacked by the malicious traffic can be reduced or avoided.

FIG. 4 is a schematic flowchart of a communication method 400 according to an embodiment of this application. It should be understood that a communication apparatus includes a modem (modem) and an operating system (OS). As shown in FIG. 4, the modem and the operating system are used as execution bodies for interaction. The method includes the following steps. For parts that are not described in detail, refer to existing protocols. It may be understood that the modem may alternatively be replaced with another part in the communication apparatus. This is not limited in this application.

S410: An application sends a first parameter to the operating system, and correspondingly, the operating system receives the first parameter from the application.

The first parameter includes at least one of the following: a temporary identifier, a temporary key, or an access token.

For example, when the application is activated or used, the application sends the first parameter to the operating system. The application being activated or used may be understood as that the communication apparatus detects data or traffic of the application, the communication apparatus detects that the application is running, or the like.

Optionally, before receiving the first parameter from the application, the operating system generates the first parameter, and sends the first parameter to the application.

For example, when the first parameter is the temporary identifier, the operating system stores a mapping relationship. The mapping relationship indicates an association relationship between a second application identifier of the application, a second application distinguishing parameter, and the temporary identifier.

For example, when the first parameter is the temporary key or the access token, the operating system may not store a mapping relationship between the temporary key or the access token, a second application identifier of the application, and a second application distinguishing parameter. This is because the temporary key or the access token carries the second application identifier and the second application distinguishing parameter of the application. Subsequently, when receiving the temporary key or the access token, the operating system may determine the second application identifier and the second application distinguishing parameter of the corresponding application.

S420: The operating system determines the second application identifier of the application based on the first parameter.

For example, the operating system determines the second application identifier of the application based on the temporary identifier and the mapping relationship.

For example, the operating system determines the second application identifier of the application based on the temporary key or the access token.

Optionally, the operating system may further determine the second application distinguishing parameter based on the first parameter. For example, the operating system determines the second application distinguish parameter of the application based on the temporary identifier and the mapping relationship; or the operating system determines the second application distinguish parameter of the application based on the temporary key or the access token.

S430: The operating system sends the second application identifier of the application to the modem, and correspondingly, the modem receives the second application identifier of the application from the operating system.

Optionally, if the operating system further determines the second application distinguishing parameter based on the first parameter in step S420, the operating system may further send the second application distinguishing parameter of the application to the modem.

For example, as shown in FIG. 2, the operating system sends the second application identifier of the application to the modem through Intf-3. Optionally, the operating system may further send the second application distinguishing parameter.

S440: The modem determines that the application matches a route selection policy rule.

Optionally, a specific implementation of this step may be as follows: The modem determines whether the application matches the route selection policy rule; and if the application matches the route selection policy rule, associates the application with a session according to the route selection policy rule; or if the application does not match the route selection policy rule, skips associating the application with the session. The following describes how to determine whether the application matches the route selection policy rule.

The following is described by using an example in which the modem determines, based on the second application identifier and the second application distinguishing parameter of the application, that the application matches the route selection policy rule. It should be understood that the second application distinguishing parameter in this implementation is optional, that is, the modem may determine, based on the second application identifier of the application, that the application matches the route selection policy rule. Details are as follows. It should be noted that a manner in which the modem determines whether the application matches the route selection policy rule is similar to step S330 in the foregoing method 300. Further, after determining that the application matches the route selection policy rule, the modem may associate the application with the session as shown in step S340. For a specific implementation, refer to the foregoing related descriptions. For brevity, details are not described herein again.

In a possible implementation, the modem determines, based on the second application identifier and the second application distinguishing parameter of the application, that the application matches the route selection policy rule.

For example, it is assumed that the modem receives a URSP rule (for example, the URSP rule 1). The modem determines whether the application matches the URSP rule 1. For example, the modem determines whether the second application identifier is the same as a first application identifier in the URSP rule 1, and whether a first application distinguishing parameter in the URSP rule 1 is the same as the second application distinguishing parameter. Specifically, if the first application identifier is the same as the second application identifier, and the first application distinguishing parameter is the same as the second application distinguishing parameter, the modem determines that the application matches the URSP rule 1. On the contrary, if the first application identifier is different from the second application identifier, and/or the first application distinguishing parameter is different from the second application distinguishing parameter, the modem determines that the application does not match the URSP rule 1.

Optionally, before it is determined whether the detected application matches the URSP rule, if security protection is performed on AppID#2 and AppD#2 of the application, for example, adding a digital signature, key encryption processing, or hash processing, the modem may perform integrity verification or authenticity verification on AppID#2 and AppD#2. When the integrity verification or the authenticity verification succeeds, that is, when determining that AppID#2 and AppD#2 are not tampered with, the modem determines, based on AppID#2 and AppD#2, whether the detected application matches the URSP rule. A specific implementation is described above. If the verification fails or the verification does not succeed, the modem does not need to further determine whether the application matches the URSP rule.

Optionally, the method 400 may be considered as detailed descriptions of step S330, that is, the modem of the communication apparatus determines, based on the second application identifier of the application, that the application matches the route selection policy rule. Step S330 in the method 300 may be further implemented by using steps S410 to S490. Therefore, related descriptions in the method 300 are also applicable to the method 400. A same or similar technical means may exist between the two methods, and similar content is not described herein again.

In the solution provided in this application, the operating system allocates a dynamic temporary identifier (or temporary key or access token) to the application, so that when being activated or used, the application sends the temporary identifier (or temporary key or access token) to the operating system, to protect interaction between the application and the operating system, and improve security during parameter transfer.

Further, in this implementation, the mapping relationship between the temporary identifier (or temporary key or access token) and the application identifier and the application distinguishing parameter of the application is introduced, to improve security during parameter transfer, and increase a matching granularity between the application and the route selection policy rule. For example, the modem or a network layer/network interface layer may obtain the second application identifier from the application by using the operating system. When interacting with the operating system, a malicious application may send a fake application identifier. If the application identifier, of the malicious application, received by the modem is the same as the application identifier of the "real" application in the URSP rule, the modem may consider traffic of the malicious application as traffic of the "real" application, and sends the traffic of the malicious application to the network. Consequently, the network resource of the "real" application is infringed, or the network node is attacked by the malicious traffic. In this implementation, the temporary identifier (or temporary key or access token) carried during interaction between the application and the operating system is introduced, to prevent the second identifier and/or the second distinguishing parameter of the application from being maliciously tampered with, ensure security of network communication, and reduce risks that the network resource of the application in the route selection policy rule is infringed and the network node is attacked by the malicious traffic.

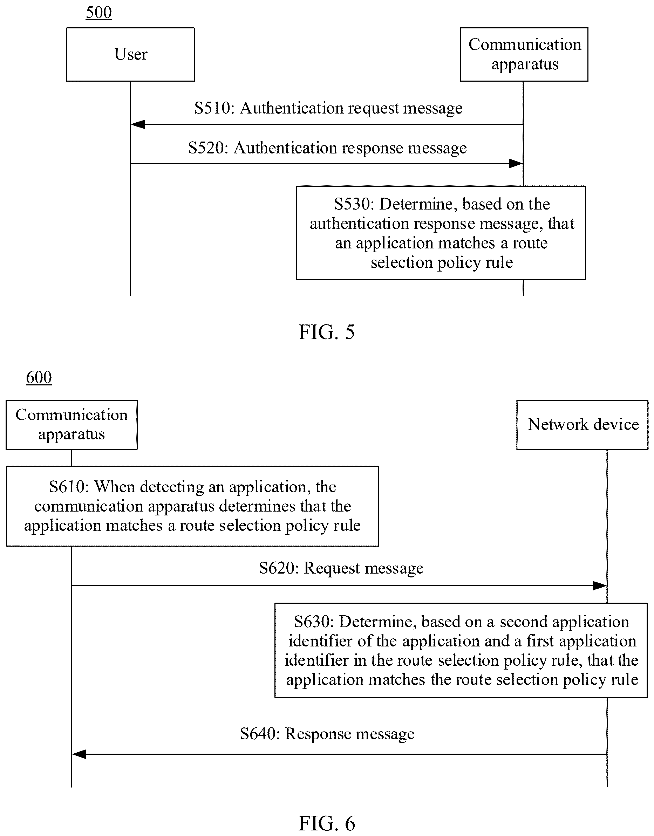

FIG. 5 is a schematic flowchart of a communication method 500 according to an embodiment of this application. As shown in FIG. 5, the method includes the following steps. For parts that are not described in detail, refer to existing protocols.

S510: A communication apparatus sends an authentication request message to a user, and correspondingly, the user receives the authentication request message from the communication apparatus.

The authentication request message includes a second application identifier of the application, and the authentication request message is used to request the user to verify the second application identifier of the application, or the authentication request message is used to request the user to determine whether the second application identifier of the application is the same as a first application identifier.

For example, the operating system of the communication apparatus triggers a user request, to request the user to identify the application. For example, the operating system triggers a pop-up window, or sends a short message or a message to the user, to request the user to determine whether the second application identifier of the application is the first application identifier. If the user determines that the second application identifier of the application is the same as the first application identifier, the user may tap to confirm on the pop-up window, reply with a short message, or the like.

Optionally, the authentication request message further includes a second application distinguishing parameter, and the authentication request message is further used to request the user to verify the second application distinguishing parameter, or is further used to request the user to determine whether the second application distinguishing parameter is the same as a first application distinguishing parameter. For a specific manner in which the operating system triggers the user to verify the second application distinguishing parameter, refer to the foregoing related descriptions of verifying the second application identifier. Details are not described herein again.

S520: The user sends an authentication response message to the communication apparatus, and correspondingly, the communication apparatus receives the authentication response message from the user.

The authentication response message includes a verification result of the second application identifier, or the authentication response message includes a first matching result of the second application identifier and the first application identifier of the application.

Optionally, if the authentication request message further includes the second application distinguishing parameter, the authentication response message further includes a verification result of the second application distinguishing parameter, or further includes a second matching result of the second application distinguishing parameter and the first application distinguishing parameter.

S530: The communication apparatus determines, based on the authentication response message, that the application matches a route selection policy rule.

Optionally, a specific implementation of this step may be as follows: The communication apparatus determines, based on the authentication response message, whether the application matches the route selection policy rule; and if the application matches the route selection policy rule, associates the application with a session according to the route selection policy rule; or if the application does not match the route selection policy rule, skips associating the application with the session. The following describes how to determine whether the application matches the route selection policy rule.

For example, when the verification result indicates that verification performed by the user on the second application identifier succeeds, the communication apparatus determines that the application matches the route selection policy rule. On the contrary, if the verification result indicates that verification performed by the user on the second application identifier does not succeed, that is, the verification fails, the communication apparatus determines that the application does not match the route selection policy rule.

Optionally, when the verification result indicates that the verification performed by the user on the second application distinguishing parameter succeeds, the communication apparatus determines that the application matches the route selection policy rule. On the contrary, if the verification result indicates that the verification performed by the user on the second application distinguishing parameter does not succeed, that is, the verification fails, the communication apparatus determines that the application does not match the route selection policy rule.

For example, when the first matching result indicates that the second application identifier is the same as the first application identifier, the communication apparatus determines that the application matches the route selection policy rule. On the contrary, if the first matching result indicates that the second application identifier is different from the first application identifier, that is, the verification fails, the communication apparatus determines that the application does not match the route selection policy rule.

Optionally, when the second matching result indicates that the second application distinguishing parameter is the same as the first application distinguishing parameter, the communication apparatus determines that the application matches the route selection policy rule. On the contrary, if the second matching result indicates that the second application distinguishing parameter is different from the first application distinguishing parameter, that is, the verification fails, the communication apparatus determines that the application does not match the route selection policy rule.

It should be noted that the foregoing is merely an example provided for ease of understanding. The implementations provided above may be implemented independently, or may be implemented in combination. In other words, the second application identifier and the second application distinguishing parameter may be verified separately, or may be verified together. When verification on both the second application identifier and the second application distinguishing parameter succeeds, the communication apparatus determines that the application matches the route selection policy rule. On the contrary, if verification on the second application identifier and/or the second application distinguishing parameter fails, that is, the second matching result indicates that the second application distinguishing parameter is different from the first application distinguishing parameter, and/or the second application identifier is different from the first application identifier, the communication apparatus determines that the application does not match the route selection policy rule.

Optionally, the method 500 may be considered as detailed descriptions of step S330, that is, the communication apparatus determines, based on the authentication response message of the user, that the application matches the route selection policy rule. Step S330 in the method 300 may be further implemented by using steps S510 and S520. Therefore, related descriptions in the method 300 are also applicable to the method 500. A same or similar technical means may exist between the two methods, and similar content is not described herein again.

According to the solutions provided in this application, the communication apparatus requests the user to perform authentication, and determines, based on the verification result of the user or the first matching result and the second matching result, that the application matches the route selection policy rule. This improves verification flexibility. In addition, the second application distinguishing parameter is further verified, to reduce risks that the network resource of the application in the route selection policy rule is infringed and the network node is attacked by the malicious traffic.

FIG. 6 is a schematic flowchart of a communication method 600 according to an embodiment of this application. As shown in FIG. 6, a communication apparatus and a network device interact as execution bodies. The method includes the following steps. For parts that are not described in detail, refer to existing protocols and related descriptions in the method 300 to the method 500. Details are not described herein. In comparison, in the methods 300 to 500, the communication apparatus (including the modem) determines, based on the application identifier and the application distinguishing parameter of the application, that the application matches the route selection policy rule. In the method 600, on the basis that the communication apparatus determines that an application matches a route selection policy rule, the network device further verifies, based on a second application identifier of the application or a second application identifier and a second application distinguishing parameter of the application, whether the application matches the route selection policy rule. More implementations are provided, to ensure authenticity of application identification.

S610: When the communication apparatus detects the application, the communication apparatus determines that the application matches the route selection policy rule.

The route selection policy rule includes a first application identifier of the application. For example, with reference to related descriptions in the existing solutions, the communication apparatus may determine whether the application matches the route selection policy rule, for example, perform determining by comparing whether the second application identifier of the detected application is the same as a first application identifier in the URSP rule. For a specific implementation, refer to the foregoing related descriptions. Details are not described herein.

Optionally, the route selection policy rule includes the first application identifier and a first application distinguishing parameter. For example, with reference to related descriptions in step S330 in the foregoing method 300, the communication apparatus may determine whether the application matches the route selection policy rule, for example, perform determining by comparing whether the second application identifier of the detected application is the same as the first application identifier in the URSP rule, and whether the second application distinguishing parameter of the detected application is the same as the first application distinguishing parameter in the URSP rule. For a specific implementation, refer to the foregoing related descriptions. Details are not described herein again.

Optionally, when detecting the application, the communication apparatus determines whether the application matches the route selection policy rule. For details, refer to related descriptions in the existing solutions. This is not limited in this application.

S620: The communication apparatus sends a request message to the network device, and correspondingly, the network device receives the request message from the communication apparatus.

The request message includes the second application identifier of the application, and the request message is used to request to verify whether the application matches the route selection policy rule. Optionally, the request message further includes an identifier of the route selection policy rule, and the identifier is used to identify the route selection policy rule (URSP rule). A representation form of the identifier of the route selection policy rule is not limited in this application. For example, the identifier may be an ID of the route selection policy rule, or precedence (precedence) of the route selection policy rule.

For example, for the application newly detected by the communication apparatus, whether to send the application identifier of the application to the network side may be determined in the following implementations.

Optionally, before sending the request message to the network device, the communication apparatus determines, based on first configuration information, to send the second application identifier to the network device. The first configuration information indicates to send the second application identifier to the network device.

For example, if the first configuration information indicates that the communication apparatus needs to send the application identifier of the application when AppID#2 of the application detected by the communication apparatus is "weixin", the communication apparatus sends the application identifier of the application to the network device after detecting that the application is "weixin". Optionally, the first configuration information of the communication apparatus may be for the application ID (namely, AppID#2) of the newly detected application, or the application ID (namely, AppID#1) that is of the application and that is carried in the route selection policy rule. This is not specifically limited in this application.

Optionally, the first configuration information is pre-configured in the communication apparatus.

Optionally, before the communication apparatus sends the request message to the network device, the network device sends first indication information to the communication apparatus. The first indication information indicates the communication apparatus to send the second application identifier of the application to the network device. Correspondingly, the communication apparatus determines, based on the first indication information, to send the second application identifier to the network device.

Optionally, the communication apparatus sends the application identifier of the application to the network side in any case.

Optionally, the request message further includes second indication information, and the second indication information indicates that the request message carries the second application identifier, or the second indication information indicates the network device to verify whether the application matches the route selection policy rule.

Optionally, security protection is performed on the second application identifier of the application. For example, the second application identifier on which security protection is performed may be a second application identifier to which a digital signature is added, a second application identifier on which key encryption processing is performed, or a second application identifier on which hash processing is performed.

Optionally, the request message is a session setup request message or a session modification request message. The session setup request message or the session modification request message carries the identifier of the route selection policy rule and the application identifier of the application that are verified on the network side, to reduce an unnecessary procedure, and reduce signaling overheads.

Optionally, the request message further includes the second application distinguishing parameter of the application. Further, security protection is performed on the second application distinguishing parameter of the application. For example, the second application distinguishing parameter that is of the application and on which security protection is performed may be a second application distinguishing parameter to which a digital signature is added, a second application distinguishing parameter on which key encryption processing is performed, or a second application distinguishing parameter on which hash processing is performed.

Optionally, the communication apparatus determines, based on second configuration information, to send the second application identifier and the second application distinguishing parameter of the application to the network device, where the second configuration information indicates to send the second application identifier and the second application distinguishing parameter to the network device.

Optionally, the communication apparatus determines, based on third indication information from the network device, to send the second application identifier and the second distinguishing parameter to the network device, where the third indication information indicates to send the second application identifier and the second application distinguishing parameter to the network device.

Optionally, the second configuration information is pre-configured in the communication apparatus.

Optionally, the request message further includes fourth indication information, and the fourth indication information indicates that the request message carries the second application identifier and the second application distinguishing parameter of the application, or the fourth indication information indicates the network device to verify whether the application matches the route selection policy rule.

Optionally, the request message further includes authentication information, the authentication information is used to verify authenticity or integrity of the application, and the authentication information is any one of the following: the digital signature, a hash value, or a message authentication code.

Optionally, the application identifier of the application, the application distinguishing parameter of the application, and the authentication information in the request message may be sent in a same message, or may be separately sent in different messages. This is not limited in this application.

S630: The network device determines, based on the first application identifier in the route selection policy rule and the second application identifier of the application, that the application matches the route selection policy rule.

Optionally, a specific implementation of this step may be as follows: The network device determines, based on the first application identifier and the second application identifier, whether the application matches the route selection policy rule, and performs step S640. The following describes how to determine whether the application matches the route selection policy rule.

Optionally, if the request message does not carry the identifier of the route selection policy rule, the network device may traverse locally stored route selection policy rules, and compare a first application identifier in each route selection policy rule and the second application identifier. If the first application identifier is the same as the second application identifier, the network device determines that the application matches the route selection policy rule. On the contrary, if the first application identifier is different from the second application identifier, the network device determines that the application does not match the route selection policy rule.

Optionally, if the request message does not carry the identifier of the route selection policy rule, the request message may also be understood as that the communication apparatus requests the network device to determine whether the application has a matched route selection policy rule. If the application has a matched route selection policy rule, traffic of the application may be routed to a slice and a network that are associated with the route selection policy rule; otherwise, the request of the communication apparatus is rejected.

Optionally, if the request message carries the identifier of the route selection policy rule, the network device determines the route selection policy rule based on the identifier of the route selection policy rule, and further compares whether the second application identifier is the same as the first application identifier. Specifically, if the second application identifier is the same as the first application identifier, the network device determines that the application matches the route selection policy rule. On the contrary, if the second application identifier is different from the first application identifier, the network device determines that the application does not match the route selection policy rule.

Optionally, if the request message further includes the second application distinguishing parameter of the application, the network device may further determine whether the second application distinguishing parameter is the same as the first application distinguishing parameter. Specifically, if the first application identifier is the same as the second application identifier, and the first application distinguishing parameter is the same as the second application distinguishing parameter, the network device determines that the application matches the route selection policy rule. On the contrary, if the first application identifier is different from the second application identifier, and/or the second application distinguishing parameter is different from the second application distinguishing parameter, the network device determines that the application does not match the route selection policy rule.

Optionally, when receiving the digitally signed or integrity protected second application identifier, the network device verifies the digital signature or the integrity protection. When the verification succeeds, the network device determines, based on the first application identifier in the route selection policy rule and the received second application identifier, whether the application matches the route selection policy rule. Optionally, the network device determines, based on the first application distinguishing parameter in the route selection policy rule and the received second distinguishing parameter, whether the application matches the route selection policy rule. For a specific implementation of determining whether the application matches the route selection policy rule, refer to the foregoing related descriptions. Details are not described herein again. For the verification performed by the network device on the digital signature or the integrity protection, refer to the existing solutions. For brevity, details are not described herein.

For example, the second application identifier (for example, AppID#2, or AppID#2 and the second application distinguishing parameter AppD#2 of the application) of the application may be carried in a digital certificate, and the digital certificate further includes a public key used to verify the digital signature of the second application identifier of the application. In this case, the network device may verify the digital signature of the second application identifier of the application by using the public key, to ensure authenticity of the second application identifier of the application.

For example, the second application identifier (for example, AppID#2, or AppID#2 and the second application distinguishing parameter AppD#2 of the application) of the application may be carried in an access token (token), and the access token (token) further includes the digital signature for the second application identifier of the application. In this case, the network device may verify the digital signature of the second application identifier of the application, to ensure authenticity of the second application identifier of the application.

For example, the second application identifier (for example, AppID#2, or AppID#2 and the second application distinguishing parameter AppD#2 of the application) of the application may be carried in fingerprint (fingerprint) information including the application, for example, the fingerprint information is generated by performing a hash operation on the digital certificate of the application. The fingerprint information is used to verify authenticity of the application.

Optionally, if the request message further includes the message authentication code, the network device may alternatively verify integrity protection of the second application identifier (for example, AppID#2, or AppID#2 and the second application distinguishing parameter AppD#2 of the application) of the application based on the message authentication code, to ensure that the second application identifier of the application is not tampered with. For a method for verifying integrity protection of to-be-verified information based on a digital signature and a message authentication code, refer to related descriptions of step S530 in the following method 500. For brevity, details are not described herein.

Optionally, the second application identifier (for example, AppID#2, or AppID#2 and the second application distinguishing parameter AppD#2 of the application) of the application may be carried in the authentication information of the application newly detected by the communication apparatus, or the application identifier of the application may include or be equivalent to the authentication information of the application. Usually, the authentication information is used to verify authenticity of the application. It should be understood that a carrier of the second application identifier of the application or other information included in the second application identifier of the application is not limited in this application.

If the verification fails, whether the application matches the route selection policy rule is not determined subsequently. When the security verification succeeds, the network device compares the received second application identifier (for example, AppID#2, or AppID#2 and the second application distinguishing parameter AppD#2) of the application and the information (for example, AppID#1, or AppID#1 and AppD#1) that is about the application and that is included in the route selection policy rule obtained by the network device, that is, determines whether the application detected by the communication apparatus matches the route selection policy rule. Specifically, if the second application identifier that is of the application and that is carried in the request message is AppID#2, and AppID#2="weixin"=AppID#1, it indicates that the application matches the route selection policy rule. If the second application identifier and the second application distinguishing parameter that are carried in the request message are: AppID#2 and AppD#2, AppID#2="weixin"=AppID#1, and AppD#2≠AppD#1 (for example, AppD#2="Google Play", and AppD#1="unknown"), it indicates that the application does not match the route selection policy rule.

S640: The network device sends a response message to the communication apparatus, and correspondingly, the communication apparatus receives the response message from the network device.

Optionally, the response message is a session setup response message (including a session setup accept/reject message) or a session modification response message (including a session modification accept/reject message).

For example, when the application matches the route selection policy rule, the response message indicates that the network device accepts a request of the communication apparatus. For example, the second application identifier carried in the request message is the same as the first application identifier carried in the route selection policy rule, that is, the verification succeeds.

Further, optionally, if the request message further includes the application distinguishing parameter of the application, when the application matches the route selection policy rule, the response message indicates that the network device accepts the request of the communication apparatus. For example, the second application distinguishing parameter carried in the request message is the same as the first application distinguishing parameter carried in the route selection policy rule.

For example, when the application does not match the route selection policy rule, the response message indicates the network device to reject the request of the communication apparatus, the response message includes a rejection cause, and the rejection cause indicates that the verification on the second application identifier of the application fails. For example, the second application identifier carried in the request message is different from the first application identifier carried in the route selection policy rule.

Optionally, if the request message further includes the application distinguishing parameter of the application, when the application does not match the route selection policy rule, the response message indicates that the network device rejects the request of the communication apparatus, the response message includes a rejection cause, and the rejection cause indicates that the second application identifier is different from the first application identifier, and/or the second application distinguishing parameter is different from the second application distinguishing parameter.

In the solutions provided in this application, on the basis that the communication apparatus determines that the detected application matches the route selection policy rule, the step in which the network device verifies whether the application matches the route selection policy rule is introduced, to more effectively ensure matching between the application and the route selection policy rule. For example, newly installed applications of the communication apparatus are not applications that match the URSP rule. However, because the applications have a same application identifier, the newly installed applications may be mistaken as "real" applications, and the "fake" applications cause a potential security risk to a network using the URSP rule. For example, a network resource of the "real" application may be incorrectly arranged for transmitting traffic of the "fake" application. Consequently, the network resource of the "real" application in the route selection policy rule is occupied and consumed, the resource of the "real" application is infringed, and a denial of service attack may even occur on the "real" application, or an attacker sends the malicious traffic of the "fake" applications to network nodes that store the "real" applications, and the network nodes may be attacked by the malicious traffic. Therefore, in this manner in which the application distinguishing parameter is further verified and identified, the network resource of the application associated with the route selection policy rule is prevented from being infringed, and risks that network nodes are attacked by the malicious traffic is reduced.

The following specifically describes, by using an example in which a communication apparatus is UE and a network device is a PCF, identification of an application for route selection of a terminal. For ease of understanding and description, an application detected by the UE may be referred to as a "current application", an application identifier and an application distinguishing parameter of the current application are referred to as a second application identifier and a second application distinguishing parameter, and an application associated with a URSP rule that includes a first application identifier and a first application distinguishing parameter and that is delivered by the network side is referred to as a "target application". Details are not described below again. In this embodiment of this application, the URSP rule delivered by the network side is integrity protected. In other words, it is considered by default that the URSP rule is not tampered with. The technical solutions of this application mainly focus on verifying whether the current application matches the URSP rule, to prevent a network resource of the target application from being infringed, and reduce a risk that a network node is attacked by malicious traffic.

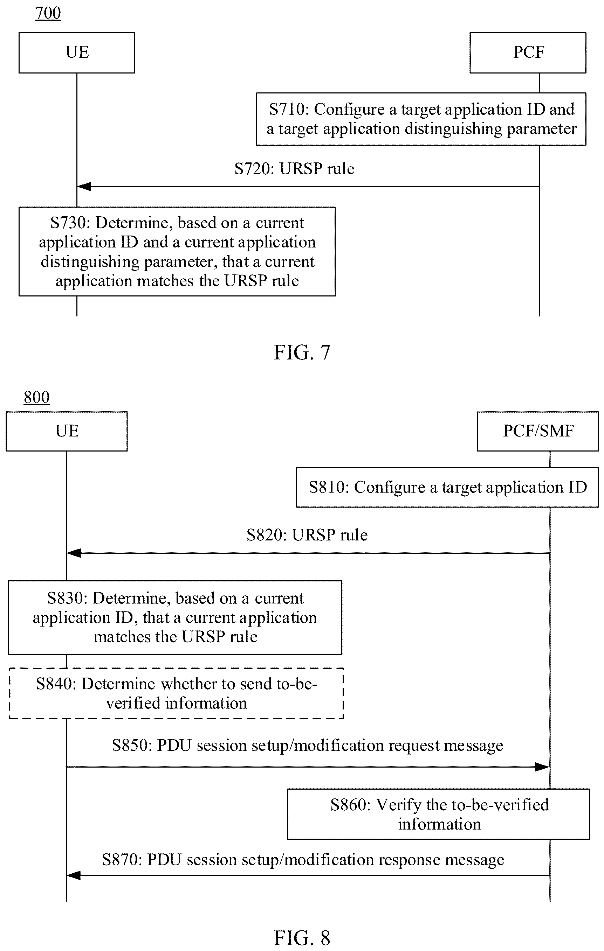

FIG. 7 is a schematic flowchart of a communication method 700 according to an embodiment of this application. The method may be considered as detailed descriptions of the method 300. It should be understood that the embodiment shown in FIG. 7 and the embodiment shown in FIG. 3 may be coupled to each other, and may be mutually referenced. Therefore, related descriptions in the method 300 are also applicable to this implementation. A same or similar technical means may exist between the two methods, and content that has been described in the embodiment shown in FIG. 3 is not described herein again. With reference to FIG. 2, an example in which the UE includes one current application (for example, App1) is used for description. It should be understood that a quantity of current applications is not limited in this application. In this implementation, an application distinguishing parameter is introduced, so that the UE can identify whether the current application matches the URSP rule. As shown in FIG. 7, the method includes the following steps. For parts that are not described in detail, refer to existing protocols.

S710: The PCF configures a target application ID (namely, the first application identifier) and a target application distinguishing parameter AppD (namely, the first application distinguishing parameter). For ease of description and distinguishing, the target application ID and the target application distinguishing parameter, of the target application, in the URSP rule delivered by the network side are respectively represented by AppID#1 and AppD#1. Correspondingly, a current application ID (namely, the second application identifier) and a current application distinguishing parameter (namely, the second application distinguishing parameter) of the current application (namely, an application detected by the UE) that are received from the OS are respectively represented by AppID#2 and AppD#2. Details are not described below again.

It should be understood that the target application distinguishing parameter AppD#1 is a parameter used to determine or distinguish between target applications. A name of the target application distinguishing parameter is merely an example, and the target application distinguishing parameter may also be referred to as target application-specific information or the like. This is not specifically limited in this application.

AppD#1 and AppD#2 may be represented in a form of Installer, an application source, a package name, a 3GPP-related parameter, or the like. For specific meanings, refer to related descriptions in step S330. For brevity, details are not described herein again.

S720: The PCF sends the URSP rule to the UE. Correspondingly, the UE receives the URSP rule from the PCF.

Optionally, the PCF sends the URSP rule to the UE via an AMF or an SMF.

The URSP rule includes AppID#1 and AppD#1. Specifically, for other content, other usage, another configuration manner, and the like included in the URSP rule, refer to related descriptions of the method 300. For brevity, details are not described herein again.

S730: The UE determines, based on the current application ID and the current application distinguishing parameter, that the current application matches the URSP rule.

Optionally, a specific implementation of this step may be as follows: The network device determines, based on the current application ID and the current application distinguishing parameter, whether the application matches the route selection policy rule; and if the application matches the route selection policy rule, associates the application with a session according to the route selection policy rule; or if the application does not match the route selection policy rule, skips associating the application with the session. The following describes how to determine whether the application matches the route selection policy rule.

For example, the UE compares whether the current application ID is the same as the target application ID, and compares whether the current application distinguishing parameter is the same as the target application distinguishing parameter. Specifically, when the current application ID is the same as the target application ID, and the current application distinguishing parameter is the same as the target application distinguishing parameter, the UE determines that the current application matches the URSP rule. On the contrary, when the current application ID is different from the target application ID, and/or the current application distinguishing parameter is different from the target application distinguishing parameter, the UE determines that the current application does not match the URSP rule.

For example, a modem of the UE receives AppID#2 and AppD#2 from the application App1, and receives the URSP rule from the PCF. The URSP rule carries AppID#1 and AppD#1. Specifically, determining whether the current application matches the URSP rule is comparing whether AppID#1 is the same as AppID#2, and comparing whether AppD#1 is the same as AppD#2. If AppID#1="weixin", AppID#2="QQ", and the two are different, the UE considers that the current application does not match the URSP rule. If AppID#1=AppID#2="weixin", whether AppD#1 is the same as AppD#2 is further compared. It is assumed that the application distinguishing parameter is determined based on Installer. For example, Installer of AppD#1 is "Huawei AppGallery", Installer of AppD#2 is "Google Play", and the two are different. In this case, the UE considers that the current application does not match the URSP rule. For another example, Installer of AppD#1 is "Huawei AppGallery", Installer of AppD#2 is "Huawei AppGallery", and the two are the same. In this case, the UE considers that the current application matches the URSP rule, and then executes the route selection rule that is associated with App1 and that is in the URSP rule. It should be understood that the foregoing is merely an example provided for ease of understanding, and should not constitute any limitation on the technical solutions. In addition, a sequence of comparing AppID#1 and AppID#2 and comparing AppD#1 and AppD#2 is not limited in this application.

Optionally, before determining whether the current application matches the URSP rule, the UE first verifies authenticity or integrity of AppID#2 and AppD#2, to determine whether AppID#2 and AppD#2 are forged or tampered with. When the verification succeeds, that is, AppID#2 and AppD #2 are not forged or tampered with, the UE determines whether the current application matches the URSP rule. If the verification fails or the verification does not succeed, the UE does not need to further determine whether the current application matches the URSP rule.

For authenticity or integrity verification of AppID#2 and AppD#2, refer to related descriptions of step S330 in the foregoing method 300. For brevity, details are not described herein again. Further, when the verification succeeds, the UE determines whether the current application matches the URSP rule. For a specific determining method, refer to the foregoing related descriptions. For brevity, details are not described herein again.

In the solutions provided in this application, the introduction of the application distinguishing parameter AppD brings addition of a parameter for the UE to identify and verify whether the current application matches the URSP rule. This improves application identification security.

In the foregoing method 700, the UE identifies and verifies whether the current application matches the URSP rule, but may not detect that the current application ID is maliciously tampered with by an attacker. Therefore, the following method 800 is proposed. When the communication apparatus determines that the current application matches the URSP rule, a network side further identifies and verifies whether the current application matches the URSP rule, to ensure security of route selection performed by the terminal.

FIG. 8 is a schematic flowchart of a communication method 800 according to an embodiment of this application. The method may be considered as detailed descriptions of the method 600. It should be understood that the embodiment shown in FIG. 8 and the embodiment shown in FIG. 6 may be coupled to each other, and may be mutually referenced. Therefore, related descriptions in the method 600 are also applicable to this implementation. A same or similar technical means may exist between the two methods, and content that has been described in the embodiment shown in FIG. 6 is not described herein again. With reference to FIG. 2, an example in which the UE includes one current application (for example, App1) is used for description. It should be understood that a quantity of current applications is not limited in this application. In this implementation, interaction and verification of to-be-verified information (for example, AppID, or AppID and AppD) are introduced, so that a network side can identify whether a current application matches a URSP rule. As shown in FIG. 8, the method includes the following steps. For parts that are not described in detail, refer to existing protocols.

S810: A PCF configures a target application ID (AppID).

Optionally, the PCF may further configure a target application distinguishing parameter AppD. For a specific implementation, refer to related descriptions of step S510 in the method 700. For brevity, details are not described herein again.

S820: The PCF sends the URSP rule to UE. Correspondingly, the UE receives the URSP rule from the PCF.

For example, the PCF sends the URSP rule to the UE via an AMF or an SMF. The URSP rule includes AppID, or the URSP rule includes AppID and AppD.

S830: The UE determines, based on a current application ID, that the current application matches the URSP rule.

For example, when detecting the current application, the UE compares whether the target application ID is the same as the current application ID, that is, compares whether AppID#1 is the same as AppID#2. Specifically, when the current application ID is the same as the target application ID, the UE determines that the current application matches the URSP rule. On the contrary, when the current application ID is different from the target application ID, the UE determines that the current application does not match the URSP rule.

Optionally, if the URSP rule includes a target application distinguishing parameter, the UE may further compare whether a current application distinguishing parameter is the same as the target application distinguishing parameter, that is, compare whether AppD#1 is the same as AppD#2. Specifically, when the current application ID is the same as the target application ID, and the current application distinguishing parameter is the same as the target application distinguishing parameter, the UE determines that the current application matches the URSP rule. On the contrary, when the current application ID is different from the target application ID, and/or the current application distinguishing parameter is different from the target application distinguishing parameter, the UE determines that the current application does not match the URSP rule.

For specific implementations of steps S810 to S830, and other content, other usage, another configuration manner, and the like included in the URSP rule, refer to related descriptions of FIG. 7. For brevity, details are not described herein again.

S840: Optionally, the UE determines whether to send the to-be-verified information to the network side.

The to-be-verified information includes AppID#2 of the current application, or the to-be-verified information includes AppID#2 and AppD#2 of the current application.

Optionally, the to-be-verified information includes an identifier of the URSP rule, so that a network device quickly determines the route selection policy rule, and subsequently determines whether the application matches the route selection policy rule.

For example, for the current application newly detected by the UE, whether to send the to-be-verified information to the network side (for example, the PCF) may be determined in the following implementations.
(1) Sending by default: The UE sends the to-be-verified information to the network side in any case.
(2) Configuration information (namely, first configuration information) of the UE: The UE determines, based on the configuration information, whether to send the to-be-verified information to the network side. For example, if the first configuration information indicates that the to-be-verified information needs to be sent when AppID#2 of the current application detected by the UE is "weixin", the UE sends the to-be-verified information to the PCF after newly detecting that the current application is "weixin", that is, performs step S850. On the contrary, if the first configuration information indicates that the to-be-verified information does not need to be sent when AppID#2 of the current application detected by the UE is not "weixin", the UE does not need to perform subsequent step S850.
(3) Network indication (namely, first indication information): The UE further determines, based on the indication delivered by the network side, whether to send the to-be-verified information to the network side. Optionally, in step S820, the URSP rule additionally carries indication information #1 (namely, the first indication information), and the indication information #1 indicates that the UE needs to send the to-be-verified information to the network side when the application identifier of the current application detected by the UE is AppID#2.

Optionally, in step S820, if the URSP rule further includes the target application distinguishing parameter AppD#1, the indication information #1 further indicates that the UE needs to send the to-be-verified information to the network side when the application identifier of the current application detected by the UE is AppID#2, and the application distinguishing parameter of the current application is AppD#2.

It should be noted that the foregoing implementations are merely examples provided for ease of understanding, and should not constitute any limitation on the technical solutions of this application. Optionally, the UE may further limit, for the foregoing three implementations, sending of the to-be-verified information to the network. In other words, the UE may determine, based on one or more of a specific application parameter (for example, the application ID is a specific ID like "weixin"), specific slice information (for example, slice selection assistance information is S-NSSAI-1), and a specific DN (for example, a DN name is DNN1), whether to send the to-be-verified information to the network side.

For example, the ID of the current application detected by the UE is "weixin", and the UE evaluates, in step S830, that the URSP rule matches the current application (for example, the matched target application ID is "weixin"). Further, the UE may determine, based on the configuration information or the network indication, that the to-be-verified information needs to be sent to the network side for the current application whose ID is "weixin", and then perform step S850.

For another example, a slice that the current application detected by the UE requests to use is S-NSSAI-1, and the UE evaluates, in step S830, that the URSP rule matches the current application (for example, the matched slice is selected as S-NSSAI-1). Further, the UE may determine, based on the configuration information or the network indication, that the to-be-verified information needs to be sent to the network side for the current application that uses the slice S-NSSAI-1, and then perform step S850.

For another example, a data network that the current application detected by the UE requests to access is DNN1, and the UE evaluates, in step S830, that the URSP rule matches the current application (for example, the matched DNN is selected as DNN1). Further, the UE may determine, based on the configuration information or the network indication, that the to-be-verified information needs to be sent to the network side for the current application that uses DNN1, and then perform step S850.

Optionally, the to-be-verified information is carried in authentication information, the authentication information is used to verify authenticity or integrity of the current application (that is not tampered with), and the authentication information includes one or more of the following: a digital signature, a hash value, or a message authentication code.

Optionally, the UE uses the authentication information as the to-be-verified information. In other words, the UE sends the authentication information to the PCF. The authentication information includes but is not limited to a digital signature of the current application, a hash value of the current application, a MAC of the current application, or the like. Optionally, the authentication information carries AppID#2, or carries AppID#2 and AppD#2. Optionally, the UE obtains the authentication information by using an OS. It should be understood that a manner in which the UE obtains the to-be-verified information is not specifically limited in this application.

Optionally, the UE determines whether to send indication information #2 (namely, second indication information) to the network side. For a specific definition of the indication information #2, refer to related descriptions of step S850. Details are not described herein.

S850: The UE sends a PDU session setup/modification request message (namely, a request message) to the SMF. Correspondingly, the SMF receives the PDU session setup/modification request message from the UE.

The PDU session setup/modification request message includes the to-be-verified information.

Optionally, the UE sends the PDU session setup/modification request message to the SMF. Further, the SMF forwards the to-be-verified information in the PDU session setup/modification request message to the PCF, so that the PCF verifies the to-be-verified information in step S870. In other words, in step S870, if the PCF performs verification, the SMF needs to send the to-be-verified information to the PCF; or if the SMF performs verification, the SMF may not send the to-be-verified information to the PCF. For ease of description, the SMF and the PCF are not specifically distinguished in the following steps.

Optionally, the PDU session setup/modification request message further includes the indication information #2, and the indication information #2 may indicate that the PDU session setup/modification request message carries the to-be-verified information, or the indication information #2 may indicate the PCF (or the SMF) on the network side to verify the to-be-verified information.

S860: The PCF (or the SMF) verifies the to-be-verified information, that is, verifies whether the current application matches the routing selection policy rule. A specific implementation of this step may be as follows: The PCF determines, based on the to-be-verified information, whether the application matches the route selection policy rule, and performs step S870. The following describes how to determine whether the application matches the route selection policy rule.

For example, the PCF (or the SMF) may determine, based on the received indication information #2, whether the to-be-verified information needs to be verified. In this implementation, backward compatibility can be better implemented.

For example, the to-be-verified information (for example, AppID#2, or AppID#2 and AppD#2) may be carried in a digital certificate, and the digital certificate further includes a public key used to verify the digital signature of the to-be-verified information. In this case, the PCF (or the SMF) may verify the digital signature of the to-be-verified information by using the public key, to ensure authenticity of the to-be-verified information.

For example, the to-be-verified information (for example, AppID#2, or AppID#2 and AppD#2) may be carried in an access token (token), and the access token (token) further includes the digital signature for the to-be-verified information. In this case, the PCF (or the SMF) may verify the digital signature of the to-be-verified information, to ensure authenticity of the to-be-verified information.

For example, the to-be-verified information (for example, AppID#2, or AppID#2 and AppD#2) may be carried in fingerprint (fingerprint) information including the current application, for example, the fingerprint information is generated by performing a hash operation on the digital certificate of the current application. The fingerprint information is used to verify authenticity of the application.

Optionally, if the to-be-verified information further includes the message authentication code, the PCF (or the SMF) may alternatively verify integrity protection of the to-be-verified information based on the message authentication code, to ensure that the to-be-verified information is not tampered with. For a method for verifying integrity protection of the to-be-verified information based on the digital signature and the message authentication code, refer to related descriptions of step S530. For brevity, details are not described herein.

Optionally, the to-be-verified information may be carried in the authentication information of the current application, or the to-be-verified information may include or be equivalent to the authentication information of the current application. Usually, the authentication information is used to verify authenticity of the current application. It should be understood that a carrier of the to-be-verified information or information included in the to-be-verified information is not limited in this application.

If the verification fails, whether the current application matches the URSP rule is not determined, that is, step S870 is performed. If the verification succeeds, the PCF (or the SMF) compares the to-be-verified information (for example, AppID#2, or AppID#2 and AppD#2) with information (for example, AppID#1, or AppID#1 and AppD#1), included in the locally stored URSP rule, about the target application, that is, determines whether the current application detected by the UE matches the URSP rule. Specifically, if the to-be-verified information is AppID#2, and AppID#2="weixin"=AppID#1, it indicates that the current application matches the URSP rule. If the to-be-verified information is AppID#2 and AppD#2, AppID#2="weixin"=AppID#1, and AppD#2#AppD#1 (for example, AppD#2="Google Play", and AppD#1="unknown"), it indicates that the current application does not completely match the URSP rule.

S870: The SMF sends a PDU session setup/modification response message (namely, a response message) to the UE. Correspondingly, the UE receives the PDU session setup/modification response message from the SMF.

For example, the session setup response message includes a session setup accept/reject message, and the session modification response message includes a session modification accept/reject message. If the verification on the to-be-verified information in step S860 does not succeed or the verification fails, for example, verification on authenticity or integrity of the current application does not succeed, and/or the current application does not match the URSP rule, for example, the application identifier of the current application is different from the application identifier, of the target application, in the URSP rule, and/or the application distinguishing parameter of the current application is different from the application distinguishing parameter, of the target application, in the URSP rule, the SMF may reject a PDU session setup/modification request of the UE in step S850. Optionally, the PDU session setup/modification response message may carry a rejection cause, for example, the to-be-verified information fails to be verified.

For example, if the verification on the to-be-verified information in step S860 succeeds, the SMF accepts the PDU session setup/modification request of the UE in step S850.

It should be noted that, if the PCF verifies the to-be-verified information in step S860, the PCF subsequently needs to send a verification result (for example, the verification succeeds or the verification fails) to the SMF, and then the SMF sends the verification result to the UE based on the PDU session setup/modification response message.

According to the solutions provided in this application, the to-be-verified information is newly introduced to the existing PDU session request, so that no new procedure needs to be added, and steps and signaling overheads are reduced. In addition, the network side verifies whether the current application matches the URSP rule, to reduce calculation complexity on the UE side, and improve user experience.

It should be understood that, in the foregoing methods 700 and 800, the application distinguishing parameter is added, so that the UE determines whether the current application matches the URSP rule. In addition, when the UE verifies that the application matches the route selection policy, the network device further performs a verification step, to reduce a risk that a network resource of the target application is infringed and attacked. In addition, when the current application is run or transferred inside the UE, the application ID may be forged. Consequently, a modem of the UE may send traffic of a malicious application to a network as traffic of the target application, and the network resource of the target application is infringed, or a network node may be attacked by the malicious traffic. Therefore, the following methods 900 and 1000 are proposed. An OS or a user verifies a current application, to ensure that information about the current application is not tampered with during transmission, avoid a potential risk, and ensure network security.

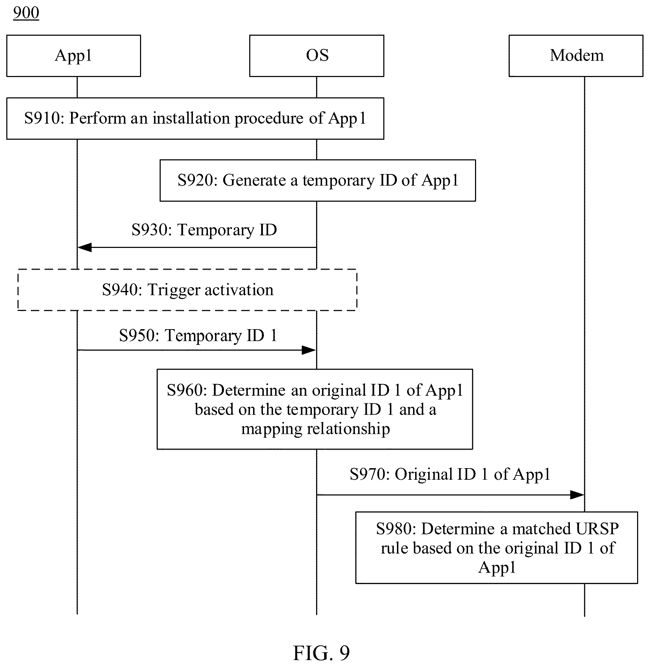

FIG. 9 is a schematic flowchart of a communication method 900 according to an embodiment of this application. The method may be further considered as detailed descriptions of the method 400. It should be understood that the embodiment shown in FIG. 9 and the embodiment shown in FIG. 4 may be coupled to each other, and may be mutually referenced. Therefore, related descriptions in the method 400 are also applicable to this implementation. A same or similar technical means may exist between the two methods, and content that has been described in the embodiment shown in FIG. 4 is not described herein again. With reference to FIG. 2, an example in which UE includes one current application (for example, App1) is used for description. It should be understood that a quantity of current applications is not limited in this application. In this implementation, an OS performs security protection and security verification on information exchanged through an interface of the OS, to avoid a security risk of a forged application ID. As shown in FIG. 9, the method includes the following steps. For parts that are not described in detail, refer to existing protocols.

S910: Perform an installation procedure of App1.

Optionally, App1 may be an application run by UE or a new application detected by the UE.

For example, when the application is installed, an OS of the UE verifies a certificate of an app developer or an app publisher, or verifies the application based on App Store (for a specific implementation, refer to related descriptions of step S330), to ensure that App1 is not tampered with during installation. For an installation procedure of App1, refer to an existing application installation procedure. For brevity, details are not described herein. It is assumed that the OS can distinguish different installed applications. For example, different installed applications are distinguished based on different application IDs. In other words, the OS may identify App1 based on an original ID of App1 (for example, the original ID of App1 may be referred to as an original ID 1 for short). Alternatively, refer to the foregoing method 500. The OS may distinguish between applications based on different application IDs and application distinguishing parameters AppD. In other words, the OS may identify App1 based on an original ID and AppD of App1 (for example, the application distinguishing parameter AppD of the App1 may be referred to as AppD1 for short).

S920: The OS generates a temporary ID 1 of App1.

Further, the OS stores a mapping relationship between the original ID 1 and the temporary ID 1 of App1. Optionally, if the application distinguishing parameter AppD is further configured for the current application, the OS stores a mapping relationship between the original ID 1, AppD1, and the temporary ID 1 of App1.

S930: The OS sends the temporary ID 1 to App1. Correspondingly, App1 receives the temporary ID 1 from the OS.

The foregoing steps S710 to S730 are a solution in which the OS allocates the temporary ID to the current application. When the user determines to trigger or activate the application, subsequent steps S740 to S780 are performed, that is, descriptions are provided by using an example in which App1 is used to request to send data by using a modem or a network when App1 is activated or used.

S940: Optionally, App1 triggers activation.

S950: App1 sends the temporary ID 1 to the OS. Correspondingly, the OS receives the temporary ID 1 from App1.

Optionally, App1 sends the original ID 1 to the OS.

S960: The OS determines the original ID 1 of the application App1 based on the temporary ID 1 and the stored mapping relationship between the original ID 1 and the temporary ID 1 of App1.

Optionally, if the OS stores the mapping relationship between the original ID 1, AppD1, and the temporary ID 1 of App1 in step S910, the OS may further determine AppD1 of App1 in step S960.

S970: The OS sends the original ID 1 of App1 to the modem. Correspondingly, the modem receives the original ID 1 of App1 from the OS.

Optionally, the OS sends the application distinguishing parameter AppD1 and another parameter of App1 to the modem.

S980: The modem determines a matched URSP rule based on the original ID 1 of App1.

Optionally, a specific implementation of this step may be as follows: The modem determines, based on the original ID 1 of App1, whether the application matches the route selection policy rule; and if the application matches the route selection policy rule, associates the application with a session according to the route selection policy rule; or if the application does not match the route selection policy rule, skips associating the application with the session. The following describes how to determine whether the application matches the route selection policy rule.

Optionally, the modem determines a matched URSP rule based on the original ID 1 and AppD1 of App1.

For example, after obtaining the original ID 1 of App1, the modem may compare the original ID 1 with a target application ID (or a target application ID and a target application distinguishing parameter AppD) in the locally stored URSP rule; and if the original ID 1 is the same as the target application ID (for example, the original ID 1 of App1=the ID of a target application App1, and AppD1=AppD of the target application App1), determine to execute a route selection rule, corresponding to App1, in the URSP rule.

Optionally, in the method 900, a risk of a forged application ID is reduced based on the temporary ID generated by the OS. In this application, another implementation may be further used to reduce a risk of forging an ID of another application by a malicious application.

In an implementation, the UE verifies the current application based on an access token (token). Specifically, the OS generates token#1 for App1, where a claim (claim) in the token may include the application ID of App1 (or include the application ID and the application distinguishing parameter AppD of App1); and sends token#1 to App1. A difference between using the temporary ID and the token lies in that the OS does not need to store a mapping relationship between the original ID 1 and token#1 of App1. If an example in which the application App1 is activated/used is still used in step S740, the temporary ID 1 in step S750 is replaced with token#1. Correspondingly, in step S760, the OS verifies integrity and authenticity of token#1 based on a digital signature carried in token#1. When the integrity and authenticity verification succeeds, the UE determines the original ID 1 of App1 (or the original ID 1 and AppD1 of App1) based on the claim (claim) in token#1, and then determines the matched URSP rule based on the original ID 1 of App1 (or the original ID 1 and AppD1 of App1). For a specific implementation, refer to related descriptions of the foregoing method 200. For brevity, details are not described herein.

In another implementation, the UE verifies the current application based on a secure channel. Specifically, the OS generates a temporary key (for example, key#1) for App1, and sends the temporary key key#1 to App1. A difference between using the temporary ID and the temporary key lies in that the OS does not need to store a mapping relationship between the original ID 1 and key#1 of App1. If an example in which App1 is activated/used is still used in step S740, App1 may integrity protect or encrypt the original ID 1 of App1 (or the original ID 1 and AppD ID of App1) by using key#1. Correspondingly, in step S780, when the verification on integrity protection succeeds or the decryption succeeds, the OS obtains the original ID 1 of App1 (or the original ID 1 and AppD1 of App1), and further determines the matched URSP rule based on the original ID 1 of App1 (or the original ID 1 and AppD1 of App1). For a specific implementation, refer to related descriptions of the method 200. For brevity, details are not described herein.

In the solution provided in this application, the OS identifies and verifies the application (for example, App1) based on the dynamic temporary ID (or the token, the temporary key, or the like), to protect interaction between the application and the OS (for example, through an interface Intf-1), and avoid malicious forging of the temporary ID (or the token, the temporary key, or the like) of the application (for example, App1). This further reduces a risk that App1 is forged or attacked. This is because it is difficult for a malicious application to predict and forge a temporary ID (or a token, a temporary key, or the like) of another application in a development phase. When the malicious application runs, the malicious application needs to have a capability of dynamically obtaining the temporary ID (or the token, the temporary key, or the like) of the another application to forge, and this capability usually requires breaking of the operating system OS of the UE. This application is mainly for the malicious application instead of a scenario in which the OS is broken. Therefore, the modem trusts a verification result of the OS, that is, security protection is provided between the modem and the OS, and the OS is not broken.

Based on the foregoing method 900, an OS identifies and verifies an application based on a dynamic temporary ID (or a token, a temporary key, or the like), to protect interaction between the application and the OS. In contrast, the following method 1000 relies on a user to identify and verify an application to reduce a security risk of a forged application ID.

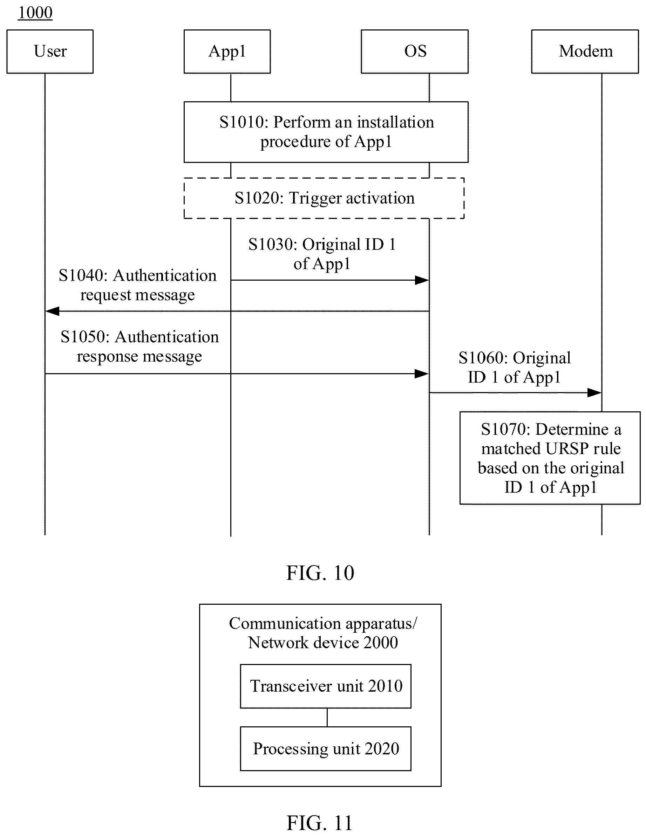

FIG. 10 is a schematic flowchart of a communication method 1000 according to an embodiment of this application. The method may be considered as detailed descriptions of the method 500. It should be understood that the embodiment shown in FIG. 10 and the embodiment shown in FIG. 5 may be coupled to each other, and may be mutually referenced. Therefore, related descriptions in the method 500 are also applicable to this implementation. A same or similar technical means may exist between the two methods, and content that has been described in the embodiment shown in FIG. 5 is not described herein again. With reference to FIG. 2, an example in which UE includes one current application (for example, App1) is used for description. It should be understood that a quantity of current applications is not limited in this application. As shown in FIG. 8, the method includes the following steps. For parts that are not described in detail, refer to existing protocols.

S1010: Perform an installation procedure of App1.

S1020: Optionally, App1 triggers activation.

For specific implementations of steps S1010 and S1020, refer to related descriptions of steps S710 to S740 in the method 700. For brevity, details are not described herein again.

S1030: App1 sends an original ID 1 to the OS. Correspondingly, the OS receives the original ID 1 from App1.

Optionally, App1 sends an application distinguishing parameter AppD1 to the OS.

S1040: The OS sends an authentication request message to a user. Correspondingly, the user receives the authentication request message from the OS.

S1050: The user sends an authentication response message to the OS. Correspondingly, the OS receives the authentication response message from the user.

For example, the OS triggers a user request, to request the user to identify the application. For example, the OS triggers a pop-up window, to request the user to determine whether a current application is App1, for example, determine whether an application ID of App1 is AppID#1. If the user determines that the application ID of App1 is AppID#1, the user may tap to confirm on the pop-up window. Optionally, the user request is further used to request the user to determine whether an application distinguishing parameter of the current application is AppD1 . Further, when the user determines that the current application is App1 (for example, the application ID of App1 is AppID#1, or the application ID of App1 is AppID#1, and an application distinguishing parameter of App1 is AppD1), the authentication response message carries a verification result indicating that user verification on AppID#1 succeeds, or user verification on AppID#1 and AppD1 succeeds. Optionally, the authentication response message carries "yes" or "no", to indicate whether the current application ID is AppID#1, or indicate whether the current application ID is AppID#1 and whether the current application distinguishing parameter is AppD 1.

For example, the authentication request message may be further used to request the user to determine whether the application identifier of the current application matches an application identifier of a target application and whether the application distinguishing parameter of the current application matches a distinguishing parameter of the target application. Correspondingly, the authentication response message carries a first matching result and a second matching result, the first matching result indicates whether the application identifier of the current application is the same as the application identifier of the target application, and the second matching result indicates whether the application distinguishing parameter of the current application is the same as the application distinguishing parameter of the target application.

As shown in FIG. 2, in the foregoing steps S1040 and S1050, a message exchanged between the OS and the user may be received and sent through an interface Intf-4, and Intf-4 is a logical interface. Optionally, interaction between the OS and the user may also be implemented through Intf-1 and an interface (not shown in FIG. 2) between App1 and the user. In this embodiment of this application, it is assumed that security protection is provided for the foregoing interfaces, that is, App1 or information exchanged between App1 and the OS is not tampered with.

S1060: The OS sends the original ID 1 of App1 to a modem. Correspondingly, the modem receives the original ID 1 of App1 from the OS.

Optionally, the OS sends the application distinguishing parameter AppD 1 and another parameter of App1 to the modem.

S1070: The modem determines a matched URSP rule based on the original ID 1 of App1.

Optionally, a specific implementation of this step may be as follows: The modem determines, based on the original ID 1 of App1, whether the application matches the route selection policy rule; and if the application matches the route selection policy rule, associates the application with a session according to the route selection policy rule; or if the application does not match the route selection policy rule, skips associating the application with the session. The following describes how to determine whether the application matches the route selection policy rule.

Optionally, the modem determines a matched URSP rule based on the original ID 1 and AppD1 of App1.

For specific implementations of steps S1060 and S1070, refer to related descriptions of steps S770 and S780 in the method 700. For brevity, details are not described herein again.

In the solution provided in this application, the OS triggers a user request, and the user identifies and verifies the current application ID (or the application ID and AppD), to reduce a security risk of forging the application ID.

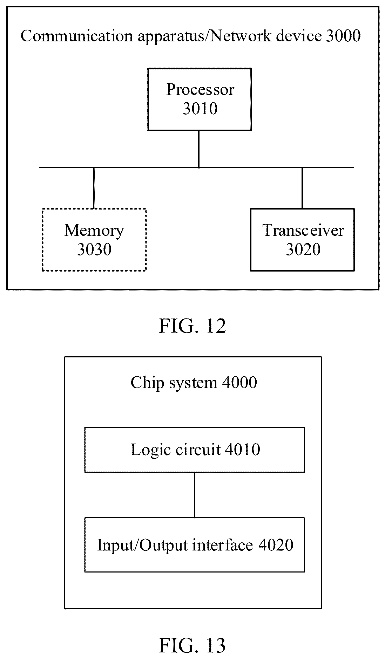

The foregoing describes in detail embodiments on a communication method side of this application with reference to FIG. 1 to FIG. 10. The following describes in detail embodiments on a communication apparatus side of this application with reference to FIG. 11 and FIG. 12. It should be understood that descriptions of the apparatus embodiments correspond to the descriptions of the method embodiments. Therefore, for parts that are not described in detail, refer to the foregoing method embodiments.

FIG. 11 is a diagram of a structure of a communication apparatus or network device 2000 according to an embodiment of this application. As shown in FIG. 11, the device 2000 may include a transceiver unit 2010 and a processing unit 2020. The transceiver unit 2010 may communicate with the outside, and the processing unit 2020 is configured to process data. The transceiver unit 2010 may also be referred to as a communication interface or a transceiver unit.

In a possible design, the device 2000 may implement the steps or procedures performed by the communication apparatus in the foregoing method embodiments. The processing unit 2020 is configured to perform processing-related operations of the communication apparatus in the foregoing method embodiments, and the transceiver unit 2010 is configured to perform receiving/sending-related operations of the communication apparatus in the foregoing method embodiments.

In another possible design, the device 2000 may implement the steps or procedures performed by the network device in the foregoing method embodiments. The transceiver unit 2010 is configured to perform receiving/sending-related operations of the network device in the foregoing method embodiments. The processing unit 2020 is configured to perform processing-related operations of the network device in the foregoing method embodiments.

It should be understood that the device 2000 herein is implemented in a form of functional units. The term "unit" herein may refer to an application-specific integrated circuit (application-specific integrated circuit, ASIC), an electronic circuit, a processor (for example, a shared processor, a special-purpose processor, or a group processor) configured to execute one or more software or firmware programs, a memory, a merged logic circuit, and/or another appropriate component that supports the described functions. In an optional example, a person skilled in the art may understand that, the device 2000 may be specifically a transmit end in the foregoing embodiments, and may be configured to perform procedures and/or steps corresponding to the transmit end in the foregoing method embodiments. Alternatively, the device 2000 may be specifically a receive end in the foregoing embodiments, and may be configured to perform procedures and/or steps corresponding to the receive end in the foregoing method embodiments. To avoid repetition, details are not described herein again.

The device 2000 in the foregoing solutions has a function of implementing corresponding steps performed by the transmit end in the foregoing methods. Alternatively, the device 2000 in the foregoing solutions has a function of implementing corresponding steps performed by the receive end in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 11 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 12 is a diagram of a structure of a communication apparatus or network device 3000 according to an embodiment of this application. As shown in FIG. 12, the device 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the device 3000 may further include a memory 3030. The memory 3030 communicates with the processor 3010 and the transceiver 3020 through internal connection paths. The memory 3030 is configured to store the instructions. The processor 3010 may execute the instructions stored in the memory 3030.

In a possible implementation, the device 3000 is configured to implement procedures and steps corresponding to the communication apparatus in the foregoing method embodiments.

In another possible implementation, the device 3000 is configured to implement procedures and steps corresponding to the network device in the foregoing method embodiments.

It should be understood that, the device 3000 may be specifically the transmit end or the receive end in the foregoing embodiments, or may be a chip or a chip system. Correspondingly, the transceiver 3020 may be a transceiver circuit of the chip. This is not limited herein. Specifically, the device 3000 may be configured to perform steps and/or procedures corresponding to the transmit end or the receive end in the foregoing method embodiments.

Optionally, the memory 3030 may include a read-only memory and a random access memory, and provide the instructions and data for the processor. A part of the memory may further include a non-volatile random access memory. For example, the memory may further store information of a device type. The processor 3010 may be configured to execute the instructions stored in the memory. When the processor 3010 executes the instructions stored in the memory, the processor 3010 is configured to perform the steps and/or procedures corresponding to the transmit end or the receive end in the foregoing method embodiments.

In an implementation process, steps in the methods can be completed by using a hardware integrated logical circuit in the processor, or by using instructions in a form of software. The steps in the method disclosed with reference to embodiments of this application may be directly executed and accomplished by using a hardware processor, or may be executed and accomplished by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that the processor in embodiments of this application may be an integrated circuit chip, and has a signal processing capability. In an implementation process, the steps in the method embodiments can be completed by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly executed and accomplished by using a hardware decoding processor, or may be executed and accomplished by using a combination of hardware in the decoding processor and software modules. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memories of the systems and methods described in this specification include but are not limited to these and any memory of another proper type.

FIG. 13 is a diagram of a structure of a chip system 4000 according to an embodiment of this application. As shown in FIG. 13, the chip system 4000 (which may also be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

In a solution, the chip system 4000 is configured to implement operations performed by the communication apparatus and the network device in the foregoing method embodiments.

An embodiment of this application further provides a computer-readable storage medium. The computer-readable storage medium stores computer instructions used to implement the method performed by the device in the foregoing method embodiments.

An embodiment of this application further provides a computer program product, including instructions. When the instructions are executed by a computer, a method performed by the device in the foregoing method embodiments is implemented.

An embodiment of this application further provides a communication system, including, for example, one or more of the communication apparatus or the network device.

For explanations and beneficial effect of related content of any one of the apparatuses provided above, refer to the corresponding method embodiments provided above. Details are not described herein again.

A person of ordinary skill in the art may be aware that, with reference to the examples described in embodiments disclosed in this specification, units and algorithm steps may be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device to perform all or some of the steps of the methods described in embodiments of this application. The foregoing storage medium includes any medium that can store program code, for example a USB flash drive, a removable hard disk, a read-only memory, a random access memory, a magnetic disk, or an optical disc.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A communication method, comprising:
when a communication apparatus detects an application, determining, by the communication apparatus based on a second application identifier and a second application distinguishing parameter of the application, that the application matches a route selection policy rule, wherein the route selection policy rule comprises a first application identifier and a first application distinguishing parameter; and
associating, by the communication apparatus, the application with a session according to the route selection policy rule.

2. The method according to claim 1, wherein before determining, by the communication apparatus based on the second application identifier and the second application distinguishing parameter of the application, that the application matches the route selection policy rule, the method further comprises:
receiving, by the communication apparatus, the route selection policy rule from a network device.

3. The method according to claim 1 or 2, wherein the second application distinguishing parameter comprises one or more of the following:
an identifier of a binding platform of the application, an identifier of an application program source of the application, a name of an installation package of the application, a user identifier of the application, an identifier of a developer of the application, an identifier of a public land mobile network associated with the application, or an identifier of an application function used to generate the route selection policy rule.

4. The method according to any one of claims 1 to 3, wherein the method further comprises:
performing, by the communication apparatus, integrity or authenticity verification on the second application identifier and the second application distinguishing parameter; and
determining, by the communication apparatus based on the second application identifier and the second application distinguishing parameter of the application, that the application matches the route selection policy rule comprises:
when the integrity or authenticity verification succeeds, determining, by the communication apparatus based on the second application identifier and the second application distinguishing parameter, that the application matches the route selection policy rule.

5. The method according to any one of claims 1 to 4, wherein determining, by the communication apparatus based on the second application identifier and the second application distinguishing parameter of the application, that the application matches the route selection policy rule comprises:
determining, by the communication apparatus, that the first application identifier is the same as the second application identifier and that the first application distinguishing parameter is the same as the second application distinguishing parameter.

6. The method according to any one of claims 1 to 5, wherein the communication apparatus comprises an operating system and a modem, and the method further comprises:
receiving, by the operating system, a first parameter from the application, wherein the first parameter comprises one or more of the following: a temporary identifier, a temporary key, or an access token;
determining, by the operating system, the second application identifier and the second application distinguishing parameter based on the first parameter; and
sending, by the operating system, the second application identifier and the second application distinguishing parameter to the modem; and
determining, by the communication apparatus based on the second application identifier and the second application distinguishing parameter of the application, that the application matches the route selection policy rule comprises:
determining, by the modem, that the second application identifier is the same as the first application identifier and that the second application distinguishing parameter is the same as the first application distinguishing parameter.

7. The method according to claim 6, wherein determining, by the operating system, the second application identifier and the second application distinguishing parameter based on the first parameter comprises:
determining, by the operating system, the second application identifier and the second application distinguishing parameter based on the temporary identifier and a mapping relationship, wherein the mapping relationship indicates an association relationship among the second application identifier, the second application distinguishing parameter, and the temporary identifier; or
determining, by the operating system, the second application identifier and the second application distinguishing parameter based on the temporary key or the access token.

8. The method according to claim 6 or 7, wherein receiving, by the operating system, the first parameter from the application comprises:
when the application is activated or used, receiving, by the operating system, the first parameter from the application.

9. The method according to any one of claims 6 to 8, wherein before receiving, by the operating system, the first parameter from the application, the method further comprises:
generating, by the operating system, the first parameter; and
sending, by the operating system, the first parameter to the application, wherein
when the first parameter is the temporary identifier, storing, by the operating system, the mapping relationship.

10. The method according to any one of claims 1 to 5, wherein the method further comprises:
sending, by the communication apparatus, an authentication request message to a user, wherein the authentication request message comprises the second application identifier and the second application distinguishing parameter, and the authentication request message is used to request the user to verify the second application identifier and the second application distinguishing parameter, or the authentication request message is used to request the user to determine whether the second application identifier is the same as the first application identifier and whether the second application distinguishing parameter is the same as the first application distinguishing parameter; and
receiving, by the communication apparatus, an authentication response message from the user, wherein the authentication response message comprises a verification result of the second application identifier and the second application distinguishing parameter, or the authentication response message comprises a first matching result of the second application identifier and the first application identifier and a second matching result of the second application distinguishing parameter and the first application distinguishing parameter; and
determining, by the communication apparatus based on the second application identifier and the second application distinguishing parameter of the application, that the application matches the route selection policy rule comprises:
determining, by the communication apparatus based on the authentication response message, that the application matches the route selection policy rule.

11. The method according to claim 10, wherein determining, by the communication apparatus based on the authentication response message, that the application matches the route selection policy rule comprises:
when the verification result indicates that the verification performed by the user on the second application identifier and the second application distinguishing parameter succeeds, determining, by the communication apparatus, that the application matches the route selection policy rule; or
when the first matching result indicates that the second application identifier is the same as the first application identifier, and the second matching result indicates that the second application distinguishing parameter is the same as the first application distinguishing parameter, determining, by the communication apparatus, that the application matches the route selection policy rule.

12. The method according to any one of claims 1 to 11, wherein the method further comprises:
obtaining, by the network device, the route selection policy rule; and
sending, by the network device, the route selection policy rule to the communication apparatus.

13. A communication method, comprising:
obtaining, by a network device, a route selection policy rule, wherein the route selection policy rule comprises a first application identifier and a first application distinguishing parameter; and sending, by the network device, the route selection policy rule to a communication apparatus.

14. A communication method, comprising:
when a communication apparatus detects an application, determining, by the communication apparatus, that the application matches a route selection policy rule;
sending, by the communication apparatus, a request message to a network device, wherein the request message comprises an application identifier of the application, and the request message is used to request to verify whether the application matches the route selection policy rule; and
receiving, by the communication apparatus, a response message from the network device.

15. The method according to claim 14, wherein the application identifier of the application is security protected.

16. The method according to claim 15, wherein the security protected application identifier of the application comprises one or more of the following:
a digitally signed application identifier of the application, an application identifier of the application that has been encrypted with a key, or an application identifier of the application that has been hash processed.

17. The method according to any one of claims 14 to 16, wherein the request message further comprises authentication information, the authentication information comprises the application identifier of the application and a digital signature used to verify the application identifier of the application, the authentication information is used to verify authenticity or integrity of the application, and the authentication information is any one of the following: the digital signature, a hash value, or a message authentication code.

18. The method according to any one of claims 14 to 17, wherein before sending, by the communication apparatus, the request message to the network device, the method further comprises:
determining, by the communication apparatus based on first configuration information, to send the application identifier of the application to the network device, wherein the first configuration information indicates to send the application identifier of the application to the network device, and the first configuration information is pre-configured in the communication apparatus; or determining, by the communication apparatus based on first indication information from the network device, to send the application identifier of the application to the network device, wherein the first indication information indicates to send the application identifier of the application to the network device.

19. The method according to any one of claims 14 to 18, wherein the request message is a session setup request message or a session modification request message.

20. The method according to any one of claims 14 to 19, wherein the request message further comprises second indication information, and the second indication information indicates that the request message carries the application identifier of the application, or the second indication information indicates the network device to verify whether the application matches the route selection policy rule.

21. The method according to any one of claims 14 to 20, wherein the request message further comprises an application distinguishing parameter of the application.

22. The method according to claim 21, wherein the application distinguishing parameter of the application is security protected.

23. The method according to claim 22, wherein the security protected application distinguishing parameter of the application comprises one or more of the following:
a digitally signed application distinguishing parameter of the application, an application distinguishing parameter of the application that is encrypted with a key, or an application distinguishing parameter of the application that is hash processed.

24. The method according to any one of claims 21 to 23, wherein before sending, by the communication apparatus, the request message to the network device, the method further comprises:
determining, by the communication apparatus based on second configuration information, to send the application identifier of the application and the application distinguishing parameter of the application to the network device, wherein the second configuration information indicates to send the application identifier of the application and the application distinguishing parameter of the application to the network device, and the second configuration information is pre-configured in the communication apparatus; or
determining, by the communication apparatus based on third indication information from the network device, to send the application identifier of the application and the application distinguishing parameter of the application to the network device, wherein the third indication information indicates to send the application identifier of the application and the application distinguishing parameter of the application to the network device.

25. The method according to any one of claims 21 to 24, wherein the request message further comprises fourth indication information, and the fourth indication information indicates that the request message carries the application identifier of the application and the application distinguishing parameter of the application, or the fourth indication information indicates the network device to verify whether the application matches the route selection policy rule.

26. The method according to any one of claims 14 to 25, wherein when the application matches the route selection policy rule, the response message indicates that the network device accepts a request of the communication apparatus.

27. The method according to any one of claims 21 to 26, wherein the method further comprises:
when the application does not match the route selection policy rule, receiving, by the communication apparatus, a rejection message from the network device, wherein the rejection message indicates that the network device rejects the request of the communication apparatus, the rejection message comprises a rejection cause, and the rejection cause indicates that the application identifier of the application is different from an application identifier in the route selection policy rule, and/or that the application distinguishing parameter of the application is different from an application distinguishing parameter in the route selection policy rule.

28. A communication method, comprising:
receiving, by a network device, a request message from a communication apparatus, wherein the request message comprises an application identifier of the application, and the request message is used to request to verify whether the application matches the route selection policy rule;
determining, by the network device based on the application identifier of the application, that the application matches the route selection policy rule; and
sending, by the network device, a response message to the communication apparatus.

29. The method according to claim 28, wherein the application identifier of the application is security protected.

30. The method according to claim 29, wherein the security protected application identifier of the application comprises one or more of the following:
a digitally signed application identifier of the application, an application identifier of the application that has been encrypted with a key, or an application identifier of the application that has been hash processed.

31. The method according to any one of claims 28 to 30, wherein the request message further comprises authentication information, the authentication information comprises the application identifier of the application and a digital signature used to verify the application identifier of the application, the authentication information is used to verify authenticity or integrity of the application, and the authentication information is any one of the following: the digital signature, a hash value, or a message authentication code.

32. The method according to any one of claims 28 to 31, wherein determining, by the network device based on the application identifier in the route selection policy rule and the application identifier of the application, that the application matches the route selection policy rule comprises: determining, by the network device, that the application identifier of the application is the same as the application identifier of the application in the route selection policy rule.

33. The method according to any one of claims 28 to 31, wherein determining, by the network device based on the application identifier in the route selection policy rule and the application identifier of the application, that the application matches the route selection policy rule comprises: when the application identifier of the application is digitally signed, verifying, by the network device, the digital signature; and
when the verification on the digital signature succeeds, determining, by the network device based on the application identifier in the route selection policy rule and the application identifier of the application, that the application matches the route selection policy rule.

34. The method according to any one of claims 28 to 33, wherein before receiving, by the network device, the request message from the communication apparatus, the method further comprises:
sending, by the network device, first indication information to the communication apparatus, wherein the first indication information indicates the communication apparatus to send the application identifier of the application to the network device.

35. The method according to any one of claims 28 to 34, wherein the request message is a session setup request message or a session modification request message.

36. The method according to any one of claims 28 to 35, wherein the request message further comprises second indication information, and the second indication information indicates that the request message carries the application identifier of the application, or the second indication information indicates the network device to verify whether the application matches the route selection policy; and
determining, by the network device based on the application identifier of the application and the application identifier in the route selection policy rule, that the application matches the route selection policy rule comprises: determining, by the network device based on the second indication information, the application identifier of the application, and the application identifier in the route selection policy rule, that the application matches the route selection policy rule.

37. The method according to any one of claims 28 to 36, wherein the request message further comprises an application distinguishing parameter of the application; and
determining, by the network device based on the application identifier of the application and the application identifier in the route selection policy rule, that the application matches the route selection policy rule comprises: determining, by the network device based on the application identifier of the application, the application identifier in the route selection policy rule, the application distinguishing parameter of the application, and an application distinguishing parameter in the route selection policy rule, that the application matches the route selection policy rule.

38. The method according to claim 37, wherein determining, by the network device based on the application identifier of the application, the application identifier in the route selection policy rule, the application distinguishing parameter of the application, and the application distinguishing parameter in the route selection policy rule, that the application matches the route selection policy rule comprises: determining, by the network device, that the application identifier of the application is the same as the application identifier in the route selection policy rule, and the application distinguishing parameter of the application is the same as the application distinguishing parameter in the route selection policy rule.

39. The method according to claim 37 or 38, wherein the application distinguishing parameter of the application is security protected.

40. The method according to claim 39, wherein the security protected application distinguishing parameter of the application comprises one or more of the following:
a digitally signed application distinguishing parameter of the application, an application distinguishing parameter of the application that is encrypted with a key, or an application distinguishing parameter of the application that is hash processed.

41. The method according to any one of claims 37 to 40, wherein before receiving, by the network device, the request message from the communication apparatus, the method further comprises:
sending, by the network device, third indication information to the communication apparatus, wherein the third indication information indicates the communication apparatus to send the application identifier of the application and the application distinguishing parameter of the application to the network device.

42. The method according to any one of claims 37 to 41, wherein the request message further comprises fourth indication information, and the fourth indication information indicates that the request message carries the application identifier of the application and the application distinguishing parameter of the application, or the fourth indication information indicates the network device to verify whether the application matches the route selection policy; and
determining, by the network device based on the application identifier of the application, the application identifier in the route selection policy rule, the application distinguishing parameter of the application, and the application distinguishing parameter in the route selection policy rule, that the application matches the route selection policy rule comprises: determining, by the network device based on the fourth indication information, the application identifier of the application, the application identifier in the route selection policy rule, the application distinguishing parameter of the application, and the application distinguishing parameter in the route selection policy rule, that the application matches the route selection policy rule.

43. The method according to any one of claims 37 to 42, wherein when the application does not match the route selection policy rule, the network device sends a rejection message to the communication apparatus, wherein the rejection message indicates that the network device rejects a request of the communication apparatus, the rejection message comprises a rejection cause, and the rejection cause indicates that the application identifier of the application is different from the application identifier in the route selection policy rule, and/or that the application distinguishing parameter of the application is different from the application distinguishing parameter in the route selection policy rule.

44. The method according to any one of claims 28 to 43, wherein when the application matches the route selection policy rule, the response message indicates that the network device accepts the request of the communication apparatus.

45. A communication method, comprising:
receiving, by an operating system, a first parameter from an application, wherein the first parameter comprises one or more of the following:
a temporary identifier, a temporary key, or an access token;
determining, by the operating system, a second application identifier and a second application distinguishing parameter of the application based on the first parameter;
sending, by the operating system, the second application identifier to a modem; and
determining, by the modem based on the second application identifier and a first application identifier, that the application matches the route selection policy rule, wherein the route selection policy rule comprises the first application identifier.

46. The method according to claim 45, wherein determining, by the modem based on the second application identifier and the first application identifier, that the application matches the route selection policy rule comprises: determining, by the modem, that the second application identifier is the same as the first application identifier.

47. The method according to claim 45 or 46, wherein determining, by the operating system, the second application identifier of the application based on the first parameter comprises: determining, by the operating system, the second application identifier based on the temporary identifier and a mapping relationship, wherein the mapping relationship indicates an association relationship between the second application identifier and the temporary identifier; or
determining, by the operating system, the second application identifier based on the temporary key or the access token.

48. The method according to any one of claims 45 to 47, wherein receiving, by the operating system, the first parameter from the application comprises: when the application is activated or used, receiving, by the operating system, the first parameter from the application.

49. The method according to claim 47 or 48, wherein before receiving, by the operating system, the first parameter from the application, the method further comprises:
generating, by the operating system, the first parameter; and
sending, by the operating system, the first parameter to the application, wherein
when the first parameter is the temporary identifier, storing, by the operating system, the mapping relationship.

50. A communication method, comprising:
receiving, by an application, a first parameter from an operating system, wherein the first parameter comprises one or more of the following:
a temporary identifier, a temporary key, or an access token; and
when the application is activated or used, sending, by the application, the first parameter to the operating system.

51. A communication method, comprising:
sending, by a communication apparatus, an authentication request message to a user, wherein the authentication request message comprises a second application identifier of an application, and the authentication request message is used to request to verify the second application identifier;
receiving, by the communication apparatus, an authentication response message from the user, wherein the authentication response message comprises a verification result of the second application identifier; and
determining, by the communication apparatus based on the authentication response message, that the application matches the route selection policy rule.

52. A communication apparatus, comprising:
a processing unit, configured to: when detecting an application, determine, based on a second application identifier and a second application distinguishing parameter of the application, that the application matches a route selection policy rule, wherein the route selection policy rule comprises a first application identifier and a first application distinguishing parameter, wherein
the processing unit is further configured to associate the application with a session according to the route selection policy rule.

53. The apparatus according to claim 52, wherein the apparatus further comprises:
a transceiver unit, configured to receive the route selection policy rule from a network device.

54. The apparatus according to claim 52 or 53, wherein the second application distinguishing parameter comprises one or more of the following:
an identifier of a binding platform of the application, an identifier of an application program source of the application, a name of an installation package of the application, a user identifier of the application, an identifier of a developer of the application, an identifier of a public land mobile network associated with the application, or an identifier of an application function used to generate the route selection policy rule.

55. The apparatus according to any one of claims 52 to 54, wherein
the processing unit is further configured to perform integrity or authenticity verification on the second application identifier and the second application distinguishing parameter; and
the processing unit is further configured to: when the integrity or authenticity verification succeeds, determine, based on the second application identifier and the second application distinguishing parameter, that the application matches the route selection policy rule.

56. The apparatus according to any one of claims 52 to 55, wherein
the processing unit is further configured to determine that the first application identifier is the same as the second application identifier and that the first application distinguishing parameter is the same as the second application distinguishing parameter.

57. The apparatus according to any one of claims 52 to 56, wherein
the transceiver unit is further configured to receive a first parameter from the application, wherein the first parameter comprises one or more of the following: a temporary identifier, a temporary key, or an access token;
the processing unit is further configured to determine the second application identifier and the second application distinguishing parameter based on the first parameter;
the transceiver unit is further configured to send the second application identifier and the second application distinguishing parameter to a modem; and
the processing unit is further configured to determine that the second application identifier is the same as the first application identifier and that the second application distinguishing parameter is the same as the first application distinguishing parameter.

58. The apparatus according to claim 57, wherein
the processing unit is further configured to determine the second application identifier and the second application distinguishing parameter based on the temporary identifier and a mapping relationship, wherein the mapping relationship indicates an association relationship among the second application identifier, the second application distinguishing parameter, and the temporary identifier; or
the processing unit is further configured to determine the second application identifier and the second application distinguishing parameter based on the temporary key or the access token.

59. The apparatus according to claim 57 or 58, wherein
the transceiver unit is further configured to: when the application is activated or used, receive the first parameter from the application.

60. The apparatus according to any one of claims 57 to 59, wherein
the processing unit is further configured to generate the first parameter;
the transceiver unit is further configured to send the first parameter to the application; and
the processing unit is further configured to: when the first parameter is the temporary identifier, store the mapping relationship.

61. The apparatus according to any one of claims 52 to 56, wherein
the transceiver unit is further configured to send an authentication request message to a user, wherein the authentication request message comprises the second application identifier and the second application distinguishing parameter, and the authentication request message is used to request the user to verify the second application identifier and the second application distinguishing parameter, or to determine whether the second application identifier is the same as the first application identifier and whether the second application distinguishing parameter is the same as the first application distinguishing parameter;
the transceiver unit is further configured to receive an authentication response message from the user, wherein the authentication response message comprises a verification result of the second application identifier and the second application distinguishing parameter, or a first matching result of the second application identifier and the first application identifier and a second matching result of the second application distinguishing parameter and the first application distinguishing parameter; and
the processing unit is further configured to determine, based on the authentication response message, that the application matches the route selection policy rule.

62. The apparatus according to claim 61, wherein
the processing unit is further configured to: when the verification result indicates that the verification performed by the user on the second application identifier and the second application distinguishing parameter succeeds, determine that the application matches the route selection policy rule; or
when the first matching result indicates that the second application identifier is the same as the first application identifier, and the second matching result indicates that the second application distinguishing parameter is the same as the first application distinguishing parameter, determine that the application matches the route selection policy rule.

63. A communication apparatus, comprising:
a processor, configured to execute a computer program stored in a memory, to cause the apparatus to perform the method according to any one of claims 1 to 12, or to cause the apparatus to perform the method according to claim 13, or to cause the apparatus to perform the method according to any one of claims 14 to 27, or to cause the apparatus to perform the method according to any one of claims 28 to 44, or to cause the apparatus to perform the method according to any one of claims 45 to 49, or to cause the apparatus to perform the method according to claim 50, or to cause the apparatus to perform the method according to claim 51.

64. The apparatus according to claim 63, wherein the apparatus further comprises the memory and/or a communication interface, the communication interface is coupled to the processor, and the communication interface is configured to input and/or output information.

65. A communication system, comprising one or more of a terminal device, a network device, an operating system, an application, or a modem, wherein the terminal device is configured to perform the method according to any one of claims 1 to 12, the network device is configured to perform the method according to claim 13 or the method according to any one of claims 28 to 44, the communication apparatus is configured to perform the method according to any one of claims 14 to 27 or the method according to claim 51, and the operating system is configured to perform the method according to any one of claims 45 to 49 or the method according to claim 50.

66. A computer-readable storage medium, wherein the computer-readable storage medium stores a computer program, and when the computer program is run on a computer, the computer is caused to perform the method according to any one of claims 1 to 51.

67. A computer program product, wherein the computer program product comprises instructions for performing the method according to any one of claims 1 to 51.
